# EUROPÄISCHE PATENTSCHRIFT

(11) **EP 4 529 613 B1**
(45) Veröffentlichungstag und Bekanntmachung des Hinweises auf die Patenterteilung: **25.02.2026**
(21) Anmeldenummer: 23729666.0
(22) Anmeldetag: 23.05.2023
(51) Int. Cl.: G01N 3/313, G01M 99/00, H01M 10/658

(54) **VERFAHREN ZUR THERMOMECHANISCHEN PRÜFUNG EINES PRÜFLINGS SOWIE EINE PRÜFVORRICHTUNG FÜR DERGLEICHEN**
METHOD FOR THERMOMECHANICALLY TESTING A TEST OBJECT, AND TESTING DEVICE FOR SAME
PROCÉDÉ D'ESSAI THERMOMÉCANIQUE D'UNE PIÈCE D'ESSAI ET DISPOSITIF D'ESSAI CORRESPONDANT

(30) Priorität: 23.05.2022 DE 102022112962; 17.08.2022 DE 102022120768
(43) Veröffentlichungstag der Anmeldung: 02.04.2025
(73) Patentinhaber: AMTAS GMBH, 51143 Köln (DE)
(72) Erfinder: GÖRING, Jürgen, 51145 Köln (DE); PÜTZ, Maximilian, 53840 Troisdorf (DE); KUNZ, Mathias, 72108 Rottenburg (DE)
(74) Vertreter: Patentanwälte Bauer Vorberg Kayser
(86) Internationale Anmeldenummer: PCT/EP2023/063831
(87) Internationale Veröffentlichungsnummer: WO 2023/227623

(56) Entgegenhaltungen:
- CN-A- 111 024 750
- CN-A- 111 562 189
- DE-A1- 102020 118 072
- DE-A1- 2 435 999
- DE-C1- 1 446 965
- US-A- 3 908 440
- US-B1- 7 966 868

## Beschreibung

Gegenstand der vorliegenden Erfindung ist ein Verfahren zur thermomechanischen Prüfung eines Prüflings gemäß dem Oberbegriff des Anspruchs 1. Weiterhin ist Gegenstand der vorliegenden Erfindung eine Prüfvorrichtung zur thermomechanischen Prüfung eines Prüflings gemäß dem Oberbegriff des Anspruchs 9.

Eine brandtechnische Abschirmung muss eine ausreichend hohe Durchbrennbeständigkeit, insbesondere eine zeitliche Durchbrennbeständigkeit aufweisen, sowie die Wärme des Brandes abschirmen. Beispielsweise im Fall einer Abschirmung eines Akkumulators eines elektromotorisch angetriebenen Kraftfahrzeugs gegenüber einer Fahrgastzelle dieses Fahrzeugs. Diese soll derart beschaffen sein, dass ein Brand des Akkumulators nicht direkt in die Fahrgastzelle vordringt, sondern es den Fahrgästen ermöglicht ist, das Fahrzeug sicher anzuhalten und dieses innerhalb eines durch Prüfvorschriften vorgegebenen Zeitraumes zu verlassen bzw. geborgen werden zu können. Als weitere Anwendungsfälle für derartige Abschirmungen seien Brandschutzabschirmeinrichtungen in Gebäuden, auf Schiffen oder in Flugzeugen genannt. Daher ist es erforderlich, für derartige Abschirmungen Materialen mit entsprechenden Eigenschaften auszuwählen oder zu entwickeln, die eine ausreichend hohe zeitliche Durchbrennbeständigkeit aufweisen. Dafür ist es erforderlich, die vorgesehenen Materialien in Abhängigkeit von den einwirkenden Energie- und Materialflüssen ("Einwirkungscharakteristik") zu prüfen. Dies wird im Kontext der vorliegenden Erfindung als "thermomechanische Prüfung" bezeichnet.

Aus dem Stand der Technik ist es bekannt, die vorgesehenen Materialien in einem der Realität entsprechenden Anordnung mit realen Mitteln zu erproben. Dabei wird mittels menschlicher Beobachtung des Prüflings bestimmt, wie stark die brandschutztechnische Abschirmung beschädigt ist. Nachteilig an dieser aus dem Stand der Technik bekannten Lösung ist es, dass diese eine nur sehr ungenaue Bestimmung der Widerstandsfähigkeit und dessen Abhängigkeit von der Einwirkungscharakteristik ermöglicht. Dieses liegt darin begründet, dass eine Variabilität hinsichtlich Energie- und Materialfluss auftritt. Weiterhin ist die Wiederholbarkeit nur sehr unzureichend, so dass mit derartigen Anordnungen kein objektiviertes Prüfverfahren zur Prüfung eines Prüflings möglich ist.

Aus der DE 24 35 999 A1 ein Verfahren sowie eine Prüfvorrichtung für die Prüfung von thermoplastischem Kunststoff bekannt, bei der ein Prüfling mittels eines gebündelten Warmgasstrahls beaufschlagt wird.

Aus der US 3 908 440 A eine Vorrichtung und ein Verfahren zur Beaufschlagung eines Prüflings mit einem thermischen Hochgeschwindigkeits-Massestrom bekannt, wobei der Prüfling einseitig eingespannt ist und ein freies Ende aufweist. Der Prüfling wird beidseitig mit dem Massestrom beaufschlagt, wobei der Prüfling an seinem freien Ende mit einem Massestück versehen ist. Eine Messskale dient zur Bestimmung der durch die thermische Belastung hervorgerufenen Verformung (Durchbiegung) des Prüflings.

Weiterhin ist aus der US 7 966 868 B1 eine Vorrichtung und ein Verfahren zur Beaufschlagung eines Prüflings mit einem thermischen Hochgeschwindigkeits-Massestrom zur Erprobung von Gasturbinen bzw. deren Bauteile vorbekannt.

Aus der CN 111 562 189 A ist eine Testvorrichtung mit einem verstellbaren Beaufschlagungsmittel zur Bereitstellung eines Hochgeschwindigkeits-Massestrom vorbekannt, wobei das Beaufschlagungsmittel auf einen Prüfling gerichtet wird, der in einer Halterung aufgenommen ist. Der Strahl des Beaufschlagungsmittel durchströmt eine Lavaldüse.

Die DE 14 46 965 C offenbart eine Vorrichtung und ein Verfahren zur Simulierung von Druck und Temperatur von einer Explosion.

Weiterhin ist aus der DE 10 2020 118 072 A1 eine Prüfvorrichtung zum Testen von Prüfkörpern auf ihre Beständigkeit gegenüber Partikelschlag und hohen Temperaturen bekannt, die mittels einer Treibladung bereitgestellt werden. Bei den Prüfkörpern handelt es sich um eine Batterie für ein elektrisch betriebenes Fahrzeug.

Aus der CN 111 024 750 A ist eine Vorrichtung und ein Verfahren zur Ablationsprüfung von Keramikmatrix-Verbundwerkstoffen mit kontrollierbarer Gasatmosphäre bekannt.

Es ist somit eine Aufgabe der vorliegenden Erfindung, ein Verfahren zur thermomechanischen Prüfung eines Prüflings anzugeben, welches eine erhöhte Wiederholbarkeit gewährleistet. Weiterhin ist es eine Aufgabe, eine Prüfvorrichtung zur thermomechanischen Prüfung eines Prüflings anzugeben, die eine Wiederholbarkeit bereitstellt und einen kompakten Aufbau aufweist.

Gelöst wird die Aufgabe durch ein Verfahren mit den Merkmalen des Patentanspruchs 1, sowie einer Prüfvorrichtung mit den Merkmalen des Patentanspruchs 9.

Die Unteransprüche betreffen jeweils bevorzugte Ausgestaltungen bzw. Weiterbildungen der vorliegenden Erfindung, deren jeweilige Merkmale im Rahmen des technisch Sinnvollen ggf. auch über die Kategoriegrenzen der verschiedenen Ansprüche hinweg frei miteinander kombinierbar sind.

Bei einem erfindungsgemäßen Verfahren handelt es sich um ein Verfahren zur thermomechanischen Prüfung eines Prüflings, wobei der Prüfling mit einem thermischen Hochgeschwindigkeits-Massestrom beaufschlagt wird, wobei eine durch die Beaufschlagung auf den Prüfling wirkende Kraft mittels der Bestimmungseinrichtung kontinuierlich ermittelt wird und daraus ein Kraft-Zeit-Verlauf bestimmt wird.

Dank des erfindungsgemäßen Verfahrens kann eine genaue brandschutzwirksame Prüfung des Prüflings ohne den Aufwand einer realen Anordnung realisiert werden. Somit können Prüflinge schneller und kostengünstiger geprüft werden, bevor dessen Material für eine brandschutztechnische Abschirmung genutzt wird oder es kann eine entsprechende Vorauswahl aus einer Vielzahl von Materialien getroffen werden, bevor eine weitergehende Erprobung erfolgt. Dabei kann das Schadensbild des Prüflings, insbesondere auf der dem Massestrom zugewandten Seite bzgl. relativer Schadensintensität begutachtet werden und unterschiedliche Prüflinge objektiv miteinander verglichen werden. Ein weiterer Vorteil des erfindungsgemäßen Verfahrens ist eine gegenüber dem Stand der Technik erhöhte Wiederholbarkeit, so dass bei der erneuten Durchführung des Verfahrens mit einem gleichartigen Prüfling technisch gleiche Ergebnisse erzielt werden, so dass ein objektives Prüfverfahren geschaffen ist, welches die Möglichkeit bietet, unterschiedliche Prüflinge objektiv und standardisiert miteinander zu vergleichen.

Nach der Durchführung des erfindungsgemäßen Verfahrens ist der Prüfling beschädigt, wobei dieser jedoch nicht zwangsweise durchgebrannt sein muss, sprich dieser ist intakt. Es kann jedoch auch zum Durchbrennen des Prüflings kommen.

Erfindungsgemäß wird eine durch die Beaufschlagung auf den Prüfling wirkende Kraft mittels einer Bestimmungseinrichtung kontinuierlich ermittelt. Dabei kann die ermittelte Kraft bzw. der Kraftverlauf Aufschluss über den wirkenden Massestrom liefern, so dass dies zur Normierung zwischen zwei oder mehreren Durchläufen des erfindungsgemäßen Verfahrens dienen kann und somit die Wiederholbarkeit erhöht ist. Mit anderen Worten können somit Schwankungen in der Einwirkcharakteristik ermittelt werden und diese bei der Auswertung entsprechend berücksichtigt werden.

Bevorzugt kann es vorgesehen sein, dass die Zeitspanne zwischen dem Beginn der Beaufschlagung und dem Eintritt eines auf ein Durchbrennen des Prüflings basierenden Kraftabfalls ermittelt wird.

Die Kraft wird dabei mittels der Bestimmungseinrichtung ermittelt. Dazu wird kontinuierlich über die gesamte Zeit der Beaufschlagung die durch den thermischen Hochgeschwindigkeits-Massestroms in den Prüfling eingetragenen Kraft ermittelt, so dass die Zeitspanne zwischen dem Beginn der Beaufschlagung und dem Eintritt eines auf ein Durchbrennen des Prüflings basierenden bzw. resultierenden Kraftabfalls ermittelt werden kann. Die Zeit wird dabei mit einer Zeitmesseinrichtung ermittelt, so dass die Zeitspannen, also die Zeitdifferenz, zwischen dem Zeitpunkt des Beginns der Beaufschlagung und dem Zeitpunkt des Eintritts eines auf ein Durchbrennen des Prüflings basierenden Kraftabfalls ermittelt werden kann. Die Bestimmungseinrichtung kann dabei die Zeitmesseinrichtung umfassen.

Mit anderen Worten wird während der gesamten Zeit der Beaufschlagung des Prüflings mit dem thermischen Hochgeschwindigkeits-Massestroms, nachfolgend auch kurz als Massestrom bezeichnet, die durch diesen in den Prüfling eingetragene Kraft mittels einer als Kraftmesseinrichtung ausgebildeten Bestimmungseinrichtung ermittelt und wird in einer Kraft-Zeit-Kurve, auch als Kraft-Zeit-Verlauf bezeichnet, aufgetragen. Sobald das Durchbrennen des Prüflings erfolgt, kommt es zu einem Kraftabfall, sprich die in den Prüfling durch den Massestrom eingetragen Kraft reduziert sich schlagartig, da dieser keine Kraft oder zumindest nur noch in einem geringen Maße eine Kraft in den Prüfling einträgt, da der Massestrom aufgrund des Durchbrennens des Prüflings durch diesen hindurch oder an diesem vorbei strömt. Der Zeitpunkt des Kraftabfalls entspricht dem Zeitpunkt des Durchbrennens des Prüflings, so dass die Zeitspanne zwischen dem Beginn der Beaufschlagung und dem Eintritt des Durchbrennens des Prüflings sehr genau ermittelt werden kann. Bevorzugt entspricht der Zeitpunkt des Beginns des Kraftabfalls dem Zeitpunkt des Beginns des Durchbrennens des Prüflings. Dank des erfindungsgemäßen Verfahrens kann die Zeitspanne bis auf 1/10 (0,1) Sekunde genau ermittelt werden.

Die zeitliche Durchbrennbeständigkeit eines Prüflings entspricht der Zeitspannen zwischen dem Beginn der Beaufschlagung und dem Eintritt des Durchbrennens des Prüflings, sprich dem Durchbruch des thermischen Hochgeschwindigkeits-Massestrom durch den Prüfling hindurch oder an diesem vorbei. Die zeitliche Durchbrennbeständigkeit kann somit als eine Bauteil- oder Materialeigenschaft angesehen werden, die es ermöglicht, eine Aussage über die Brandschutzeigenschaften und dem Widerstand gegen thermische Einwirkungen dieses Bauteils oder des Materials zu treffen. Bevorzugt ist das erfindungsgemäße Verfahren insbesondere durch die kontinuierliche Kraftermittlung dazu geeignet, den Impulsverlauf (Impulsverlaufskurve) zu ermitteln.

Der thermischen Hochgeschwindigkeits-Massestroms, kurz Massestrom, wird mittels eines Beaufschlagungsmittels bereitgestellt und trägt Wärme und eine Kraft in den Prüfling ein. Dabei kann der thermische Hochgeschwindigkeits-Massestrom in Form eines Strahls ausgebildet sein, der auf den Prüfling gerichtet ist. Die Kraft die in den Prüfling durch den Massestrom eingetragen wird, sprich auf diesen wirkt, wird durch das Auftreffen des Massestroms mit einer Strömungsgeschwindigkeit bereitgestellt. Es kann vorgesehen sein, dass dem Massestrom Partikel beigemengt sind, wobei der Massestrom besonders bevorzugt ein gasförmiger Strom ist. Der Massestrom weist eine Strömungsgeschwindigkeit auf, die bevorzugt in ihrem Maximum höher als 50 m/s, besonders bevorzugt höher als 100 m/s, ganz besonders bevorzugt höher als 200 m/s ist. Bevorzugt ist die Strömungsgeschwindigkeit supersonisch und höher als 300 m/s. Dies kommt den Thermal Runaway-Bedingungen eines Akkumulators am nächsten. Der Massestrom weist eine Temperatur auf, die wesentlich höher ist als die Umgebungstemperatur, so dass die Wärme zumindest lokal in den Prüfling eingetragen wird und sich dessen Temperatur erhöht. Bevorzugt ist die Temperatur des Massestrom in seinem Maximum höher als die Schmelztemperatur des Prüflings. Bevorzugt ist die Temperatur des Massestrom in seinem Maximum höher als 500°C, besonders bevorzugt höher als 600°C und ganz besonders bevorzugt höher als 800°C. Somit kann die zeitliche Durchbrennbeständigkeit auch von Prüflingen aus einem Material mit einem relativ hohen Schmelzpunkt ermittelt werden. Bevorzugt ist die erzeugbare maximale Temperatur des Prüflings höher als die Schmelztemperatur des Prüflings, insbesondere ist die erzeugbare maximale Temperatur höher als die Temperatur des Massestroms. Der Massestrom weist eine Temperatur oberhalb der Umgebungstemperatur auf, wobei es beim Auftreffen des Massestroms auf den Prüfling zu einer Umwandlung der kinetischen Energie des Massestroms in eine thermische Energie, sprich zu einer Temperaturerhöhung im Prüfling kommt. Somit kann der Prüfling auf eine Temperatur erwärmt bzw. erhitzt werden, die größer ist als die Temperatur des Massestrom selbst. Somit kann Energie und Kosten gespart werden.

Das Durchbrennen des Prüflings wird auch als Durchbruch des Prüflings bezeichnet, dass im Sinne von einem Durchbrechen eines Hindernisses, welches der Prüfling für den Massestrom darstellt, gemeint ist. Das Durchbrennen des Prüflings stellt ein zumindest lokales Aufschmelzen und/oder Verbrennen des Materials des Prüflings durch den Massestrom dar, so dass dadurch die geometrische Form des Prüflings verändert wird. Mit anderen Worten wird das Material zumindest lokal aufgeschmolzen und fließt aus dem Einflussbereich des Massestroms heraus und/oder verbrennt zumindest teilweise.

In einer bevorzugten Weiterbildung erfolgt die kontinuierliche Ermittlung der eingetragenen Kraft mit einer Zeitauflösung von zumindest 1/25 Sekunde. Dies bedeutet, dass 25 Kraftmesswerte pro Sekunde aufgezeichnet werden. In einer besonderen vorteilhaften Weiterbildung ist die Zeitauflösung von zumindest 1/50 Sekunde. Dank derartiger Zeitauflösungen lässt sich die Genauigkeit des erfindungsgemäßen Verfahrens weiter verbessern.

Der Prüfling kann bevorzugt als ein Probekörper, beispielsweise in Form einer Platte, oder als ein Bauteil mit einer von einer Platte abweichenden geometrischen Form ausgebildet sein. Somit bietet das erfindungsgemäße Verfahren die Möglichkeit, sowohl plattenförmige Probenkörper, als auch reale Bauteile wie Gehäuse oder Deckel auf deren zeitlichen Durchbrennbeständigkeit zu prüfen.

Bevorzugt kann der Kraftabfall, der aufgrund des Durchbrennens des Prüflings eintritt, mehr als 50%, besonders bevorzugt mehr als 80% der zeitlich vor dem Kraftabfall eingetragenen Kraft betragen. Besonders bevorzugt kann der Kraftabfall mehr als 50%, ganz besonders bevorzugt mehr als 80% der zeitlich unmittelbar vor dem Kraftabfall eingetragenen Kraft betragen. Somit fällt die Kraft beim Durchbrennen gegenüber einer zuvor annähernd konstant wirkenden Kraft stark ab, so dass der Zeitpunkt des Durchbrennens des Prüflings und somit die Zeitspanne genau bestimmt werden kann. Bevorzugt erfolgt der Kraftabfall innerhalb einer Zeit von weniger als 2 Sekunden, besonders bevorzugt in weniger als 1,5 Sekunden und ganz besonders bevorzugt in weniger als 1 Sekunde. Der Kraftabfall stellt somit eine Art Sprung in einem Kraft-Zeit-Diagramm dar, so dass der Zeitpunkt des Beginns des Kraftabfalls und somit der Zeitpunkt des Beginns des Durchbrennens genau bestimmt werden kann.

In einer vorteilhaften Weiterbildung des Verfahrens strömt der Massestrom durch eine durch das Durchbrennen erzeugte Öffnung des Prüflings. Der Massestrom ist somit nicht auf einen Randabschnitt des Prüflings, sondern bevorzugt auf einen mittigen Abschnitt des Prüflings gerichtet, so dass durch das Durchbrennen eine Öffnung, die bevorzugt eine im Wesentlichen runde Form, insbesondere eine im Wesentlichen kreisrunde Form aufweist, in dem Prüfling ausgebildet ist, durch die der Massestrom nach dem erfolgten Durchbrennen strömt. Da der Massestrom durch die Öffnung strömt und somit zumindest nicht mehr vollständig auf den Prüfling trifft, trägt dieser nach dem Durchbrennen keine oder nur noch eine sehr geringe Kraft in den Prüfling ein, im Gegensatz zu einem Zeitpunkt vor dem Durchbrennen. Mit anderen Worten bahnt sich der Massestrom mittels des Durchbrennens und die daraus resultierende Öffnung im Prüfling seinen Weg, so dass dieser ungehindert, also ohne wesentliche Krafteintragung in den Prüfling, durch den Prüfling hindurch strömen kann. Somit kann der durch das Durchbrennen basierende Kraftabfall noch abrupter erfolgen und die Messgenauigkeit weiter verbessert werden.

In einer weiteren vorteilhaften Weiterbildung des Verfahrens wird der Zeitpunkt des Beginns der Beaufschlagung durch einen Kraftanstieg ermittelt. In dem Zeitpunkt in dem der Prüfling mit dem Massestrom beaufschlagt wird, erfolgt auch der Eintrag der Kraft, so dass der zuvor unbelastete Prüfling jetzt durch den Massestrom belastet ist, also mit einer Kraft beaufschlagt wird. Somit kann der Zeitpunkt des Beginns der Beaufschlagung mit dem Kraftanstieg ermittelt werden. Es ist ebenfalls denkbar und möglich, dass der Zeitpunkt des Beginns der Beaufschlagung nicht gleich dem Zeitpunkt des Beginns des Kraftanstiegs ist, sondern erst ein späterer Zeitpunkt ist, beispielsweise ein Zeitpunkt der einen vorher festgelegten zeitlichen Abstand zu dem Zeitpunkt des Beginns des Kraftanstiegs aufweist oder der Zeitpunkt des Beginns der Beaufschlagung der Zeitpunkt ist, in dem die Kraft ein erstes Maximum (erster Wendepunkt im Kraft-Zeit-Verlauf) erreicht, der beispielsweise durch einen Startimpuls des Massestroms entsteht. Somit kann beispielsweise einer Vorwärmphase des Prüflings Rechnung getragen werden und die Bestimmung der zeitlichen Durchbrennbeständigkeit weiter verbessert werden.

In einer alternativen Ausführung des Verfahrens ist es aber ebenfalls denkbar und möglich, dass der Zeitpunkt des Beginns der Beaufschlagung durch den Start des thermischen Hochgeschwindigkeits-Massestroms ermittelt wird, beispielsweise den Zeitpunkt einer Zündung. Mit einer derartigen Ausführung des Verfahrens kann beispielsweise eine wie im Feld auftretende Entzündung eines Brandes nachgestellt werden, da der Zeitpunkt des Starts des Massestroms als der Beginn der Entzündung eines Brandes angesehen werden kann. Das erfindungsgemäße Verfahren bietet somit nicht nur eine einzige Möglichkeit, die zeitliche Durchbrennbeständigkeit zu ermitteln. Vielmehr bietet das erfindungsgemäße Verfahren auch die Möglichkeit in einem einzigen Durchlauf den Zeitpunkt der Zündung, den Zeitpunkt des Beginns des Kraftanstiegs und den Zeitpunkt des ersten Maximums und die daraus resultierenden Zeitspannen zu ermittelt und somit ein ganzheitliches Ergebnis für die zeitliche Durchbrennbeständigkeit des Prüflings zu liefern. Somit liefert das erfindungsgemäße Verfahren nicht nur sehr genaue Messergebnisse, sondern ist auch noch kosten- und ressourcensparend.

In einer weiteren vorteilhaften Weiterbildung des Verfahrens wird eine Temperatur des Prüflings ermittelt. Die Temperatur wird dabei mittels einer Temperaturmesseinrichtung während der Beaufschlagung des Prüflings durch den Massestrom ermittelt. Die Bestimmungseinrichtung umfasst bevorzugt die Temperaturmesseinrichtung. Die Temperaturmesseinrichtung kann beispielsweise als ein Thermoelement, Thermometer, Infrarotthermometer oder dergleichen ausgebildet sein. Die Temperaturmesseinrichtung kann bevorzugt als analoge oder digitale Messeinrichtung ausgebildet sein. Bevorzugt erfolgt die Ermittlung der Temperatur kontinuierlich über die Zeit, so dass eine Temperatur-Zeit-Kurve aufgezeichnet wird, die zur Bestimmung der zeitlichen Durchbrennbeständigkeit genutzt werden kann. Es kann vorgesehen sein, dass redundant und gleichzeitig eine Kraft-Zeit-Kurve aufgenommen wird.. Bevorzugt erfolgt die Messung der Temperatur in dem Abschnitt des Prüflings, auf den der Massestrom gerichtet ist. Besonders bevorzugt wird die Temperatur auf der dem Massestrom abgewandten Seite des Prüflings ermittelt. Damit lässt sich die Temperatur in dem Abschnitt des Prüflings ermittelt, der von dem Massestrom beaufschlagt wird, ohne jedoch direkt von dem Massestrom getroffen zu werden. Mit anderen Worten schirmt der Prüfling die Temperaturmesseinrichtung ab. Die dem Massestrom abgewandte Seite des Prüflings ist die Seite des Prüflings, die der Seite auf die der Massestrom vor dem Durchbrennen trifft, abgewandt ist. Mit anderen Worten ist die abgewandte Seite die Rückseite von der Seite, die von dem Massestrom vor dem Durchbrennen getroffen wird. Die dem Massestrom abgewandte Seite des Prüflings stellt in der praktischen Anwendung jene Seite des Prüflings dar, die dieser gegen einen Brand abschirmen soll. Weiterhin lässt dies auch ein Rückschluss auf die Wärmeleitfähigkeit des Prüflings zu.

In einer weiteren vorteilhaften Weiterbildung des Verfahrens kann es vorgesehen sein, dass die Temperatur an mehreren Stellen des Prüflings ermittelt wird. Dadurch lässt sich die Temperaturverteilung und die Temperaturausbreitung, sprich deren Veränderung über die Zeit, ermitteln.

In einer weiteren vorteilhaften Weiterbildung des Verfahrens kann der Beginn der Beaufschlagung durch das Überschreiten einer vorbestimmten Temperatur des Prüflings ermittelt werden, sprich der Zeitpunkt des Beginns der Beaufschlagung entspricht jenem Zeitpunkt, in dem einer zuvor vorbestimmt, also einer zuvor festgelegte, Temperatur des Prüflings überschreitet. Dies bietet die Möglichkeit, eine Vorwärmphase des Prüflings bei der Ermittlung der zeitlichen Durchbrennbeständigkeit außer Acht zu lassen, sprich die Vorwärmphase aus der Zeitspanne die als Maß für die zeitliche Durchbrennbeständigkeit herauszunehmen.

Es kann in einer weiteren vorteilhaften Weiterbildung des Verfahrens vorgesehen sein, dass die Ermittlung der Kraft und der Temperatur in einer gemeinsamen Datenerfassungseinrichtung erfolgt. Dies kann beispielsweise mittels eines Messrechners in Form eines Computers erfolgen. Dies bietet die Möglichkeit, die Messergebnisse automatisiert auszuwerten, beispielsweise in dem die zuvor dargelegten unterschiedlichen Bestimmungsmethoden für die Zeitspanne als Maß für die zeitliche Durchbrennbeständigkeit ermittelt werden. Bevorzugt kann die gemeinsame Datenerfassungseinrichtung ein Multimeter umfassen. Bevorzugt umfasst die Bestimmungseinrichtung die Datenerfassungseinrichtung.

Weiterhin kann es in einer vorteilhaften Weiterbildung des Verfahrens vorgesehen sein, dass ein auf den Prüfling wirkender Impuls mittels der über die Zeitspanne wirkenden Kraft bestimmt wird. Somit lässt sich aus der über die Zeit der Beaufschlagung kontinuierlich ermittelten Kraft der Impuls bzw. der Impulsverlauf ermitteln, welche durch den Massestrom in den Prüfling eingetragen wird. Der Impuls entspricht im Wesentlichen dem sogenannten Schubintegral des Massestroms. Das Schubintegral kann als Maß für die Schädigung dienen. Der Impuls kann bevorzugt zwischen 1 Newtonsekunde (Ns) und 250 Ns betragen. Als besonders vorteilhaft haben sich Masseströme erwiesen, die einen Impuls bis 100Ns in den Prüfling eintragen. Dies ist kosten- und ressourcensparend.

Es kann in einer vorteilhaften Weiterbildung vorgesehen sein, dass eine Thermofotografie und/oder eine Thermografie des Prüflings aufgezeichnet wird. Dies kann beispielsweise mittels einer Infrarotkamera erfolgen, wobei die Bestimmungseinrichtung die Infrarotkamera umfassen kann. Somit lässt sich die Temperaturausbreitung im Prüfling über die Zeit der Beaufschlagung ermitteln, wobei damit weiterhin die Möglichkeit geschaffen wird, sogenannte Hotspots im Prüfling zu ermitteln. Bevorzugt erfolgt die Thermofotografie und/oder die Thermografie auf der dem Massestrom abgewandten Seite des Prüflings. Dies bietet den Vorteil, dass Störungen die durch den Massestrom erzeugt werden, reduziert sind und dass die Seite des Prüflings betrachtet wird, die die abzuschirmende Seite darstellt. In einer vorteilhaften Weiterbildung kann die Thermografie als differentielle Thermografie erfolgen, so dass eine Albedo reduziert wird. Somit kann durch die eine Infrarotkamera umfassende Bestimmungseinrichtung die zeitliche Durchbrennbeständigkeit bestimmt werden.

In einer weiteren vorteilhaften Weiterbildung kann es vorgesehen sein, dass eine Filmaufnahme der Beaufschlagung aufgezeichnet wird, bevorzugt mit einer Bildfrequenz von mehr als 30 Bilder pro Sekunde (Frames per Second kurz fps), besonders bevorzugt von mehr als 100 Bilder pro Sekunde und ganz besonders bevorzugt mehr als 200 Bilder pro Sekunde. Die Filmaufnahme kann beispielsweise mittels einer Hochgeschwindigkeitskamera erfolgen, wobei die Bestimmungseinrichtung die Hochgeschwindigkeitskamera umfassen kann. Bevorzugt wird die Filmaufnahme von dem Auftreffen des Massestrom auf den Prüfling und/oder der dem Massestrom abgewandten Seite des Prüflings aufgezeichnet. Somit kann durch die eine Hochgeschwindigkeitskamera umfassende Bestimmungseinrichtung die zeitliche Durchbrennbeständigkeit bestimmt werden.

In einer vorteilhaften Weiterbildung kann es vorgesehen sein, dass die Datenerfassungseinrichtung, die beispielsweise als Computer ausgebildet ist, neben der Kraft und der Temperatur ebenfalls die Thermofotografie und/oder die Thermografie und/oder die Filmaufnahme der Kamera aufzeichnet.

Bevorzugt ist diese Datenerfassungseinrichtung derart ausgebildet, dass diese anhand von Markern automatisiert die Verläufe der Messwerte der jeweiligen Messeinrichtungen (beispielsweise der Kraft oder der Temperatur) und die Filmaufnahme und/oder die Thermofotografie und/oder die Thermografie synchronisiert werden. Besonders bevorzugt wird das daraus resultierende Ergebnis in einer gemeinsamen Datei durch die Datenerfassungseinrichtung abgespeichert. Als Marker für die Synchronisation kann beispielsweise ein Zündimpuls, optisches oder akustisches Zündsignal oder dergleichen dienen.

In einer vorteilhaften Weiterbildung kann es vorgesehen sein, dass die Datenerfassungseinrichtung derart ausgebildet ist, den Film mittels automatisierter Bildauswertung auf Funkenflug auf der dem Massestrom abgewandten Seite des Prüflings auszuwerten und somit den Zeitpunkt des Beginns des Funkenflugs zu ermitteln. Der Beginn des Funkenflugs auf der dem Massestrom abgewandten Seite des Prüflings entspricht dem Durchbrennen des Prüflings.

In einer weiteren vorteilhaften Weiterbildung kann es vorgesehen sein, dass die Datenerfassungseinrichtung derart ausgebildet ist, den Film mittels automatisierter Bildauswertung auf den Zeitpunkt des Beginns der Beaufschlagung des Prüflings durch den Massestroms. Mit anderen Worten können die zur Ermittlung der Zeitspanne relevanten Zeitpunkte, sprich dem Zeitpunkt des Beginns der Beaufschlagung und dem Zeitpunkt des Durchbrennens, ermittelt werden und somit mittels der automatisierten Bildauswertung der Filmaufnahme die Durchbrennbeständigkeit ermittelt werden. Somit kann eine Redundanz zu den anderen Messeinrichtungen realisiert werden und die Genauigkeit weiter erhöht werden.

In einer vorteilhaften Weiterbildung des Verfahrens kann es vorgesehen sein, dass während der Beaufschlagung ein akustisches Signal ermittelt wird. Dieses akustische Signal kann mittels einer akustischen Messeinrichtung ermittelt werden, wobei diese beispielsweise ein Mikrophon umfassen kann. Bevorzugt umfasst die Bestimmungseinrichtung die akustische Messeinrichtung.

Bevorzugt ist die akustische Messeinrichtung mit der Datenerfassungseinrichtung verbunden. Somit lassen sich alle ermittelten Messdaten in einer gemeinsamen Datenerfassungseinrichtung verarbeiten und synchronisieren.

Das akustische Signal kann in einer vorteilhaften Weiterbildung auch bereits zeitlich vor der Beaufschlagung gestartet werden. Somit lässt sich der Zeitpunkt des Beginns der Beaufschlagung des Prüflings durch den Massestrom akustisch ermitteln, so dass hier eine Redundanz geschaffen werden kann und dies als Marker für die Synchronisation der einzelnen Messverläufe dienen kann.

Weiterhin lässt sich anhand des akustischen Signals ebenfalls der Zeitpunkt des Durchbrennens des Prüflings bestimmen. Somit lässt sich die Zeitspanne als Maß der zeitlichen Durchbrennbeständigkeit durch die akustische Messeinrichtung bestimmen.

Weiterhin kann durch die akustische Messeinrichtung auch hier eine Redundanz zu den weiteren Messeinrichtungen bereitgestellt werden, die zusätzlich auch auf einem anderen Messprinzip beruht. Weiterhin bietet die Ermittlung des akustischen Signals den Vorteil, dass diese nicht durch eine Rauchentwicklung während der Beaufschlagung in ihren Messeigenschaften beeinträchtigt ist, wie dies beispielsweise bei optischen Messeinrichtung wie eine Kamera möglich ist. Somit kann sichergestellt werden, dass auch bei einer Beeinträchtigung der anderen Messeinrichtungen die Durchbrennbeständigkeit ermittelt werden kann und somit dank der Ermittlung des akustischen Signals eine kostenintensive Wiederholung eines Versuchs nicht erforderlich ist.

In einer weiteren vorteilhaften Ausführung des Verfahrens kann es vorgesehen sein, dass die Strahlgeschwindigkeit des Massestroms ermittelt wird. Die Strahlgeschwindigkeit kann mittels einer Strahlgeschwindigkeitsmesseinrichtung ermittelt werden, beispielsweise kann diese mittels einer Dopplerspektroskopie erfolgen. Bevorzugt kann die Strahlgeschwindigkeit räumlich vor dem Auftreffen des Massestroms auf den Prüfling bestimmt werden. Mit anderen Worten ist die Strahlgeschwindigkeitsmesseinrichtung räumlich zwischen dem Beaufschlagungsmittel und dem Prüfling angeordnet. Dies bietet den Vorteil, dass beispielsweise neben der in den Prüfling eingetragenen Kraft oder Temperatur auch die Strahlgeschwindigkeit kontinuierlich ermittelt wird und diese über die Zeit aufgetragen werden kann, so dass evtl. Veränderungen im Kraftverlauf/Temperaturverlauf mit jenen des Strahlgeschwindigkeitsverlaufs abgeglichen werden kann und dadurch die Messgenauigkeit des erfindungsgemäßen Verfahrens weiter verbessert werden kann. Aus der Kraft- und Geschwindigkeitsmessung kann der Massestrom rechnerisch ermittelt werden. Alternativ oder zusätzlich kann es vorgesehen sein, dass die Strahlgeschwindigkeit auf der dem Massestrom abgewandten Seite des Prüflings bestimmt wird, sprich erst nach dem Durchbrennen wird hier die Strahlgeschwindigkeit des Massestrom ermittelt. Die Strahlgeschwindigkeit des Massestroms kann auch als Strömungsgeschwindigkeit des Massestroms bezeichnet werden.

In einer vorteilhaften Weiterbildung umfasst der Prüfling ein Material für ein Batteriegehäuse oder ist ein Teil eines Batteriegehäuses oder ein Batteriegehäuse. Das erfindungsgemäße Verfahren ist insbesondere geeignet, ein Material, sprich einen Werkstoff, für ein Batteriegehäuse oder ein Teil eines Batteriegehäuses oder ein Batteriegehäuse selbst zu ermitteln. Batteriegehäuse dienen der Aufnahme und der Abschirmung von Batterien. Unter Batterien werden auch Akkumulatoren verstanden, insbesondere Lithium-Ionen-Akkumulatoren für elektromotorisch angetriebene Kraftfahrzeuge. Im Fall eines Brandes solcher Akkumulatoren ist es erforderlich, die Fahrgäste des Kraftfahrzeugs vor dem Brand derart zu schützen, dass diese das Fahrzeug verletzungsfrei verlassen können, bevor der Brand in die Fahrgastzelle vordringt.

In einer vorteilhaften Weiterbildung wird der Massestrom orthogonal oder in einem Winkel auf den Prüfling gelenkt. Dies erhöht die Variabilität des Verfahrens, so dass der Prüfling mit dem Massestrom in einem derartigen Winkel beaufschlagt werden kann, wie dies den praktischen Gegebenheiten eines späteren Einsatzes entspricht. Alternativ oder zusätzlich ist es denkbar, auch den Abstand zwischen dem den Massestrom bereitstellenden Beaufschlagungsmittel und dem Prüfling einstellbar zu gestalten, um Temperaturverlauf und Strahlcharakteristik anpassbar zu gestalten.

In einer bevorzugten Ausführungsvariante des Verfahrens wird der Massestrom durch eine Raketentreibladung, einem Acetylenbrenner mit Masseeinspeisung, Flammspritzen, galvanisches Element oder Plasmaspritzen bereitgestellt. Diese werden auch als Beaufschlagungsmittel bezeichnet. Insbesondere Raketentreibladungen die als Festkörper-Komposit-Treibladungen ausgebildet sind, haben sich als besonders vorteilhaft erwiesen, da diese einen reproduzierbaren und teilweise konstanten (gleichmäßigeren) Massestrom über die Zeit der Beaufschlagung bereitstellen und die Wiederholbarkeit erhöht ist, da die Toleranzen zwischen den einzelnen Treibladungen sehr gering sind.

In einer vorteilhaften Weiterbildung ist das galvanische Element als Sekundärelement, auch als Akkumulator bezeichnet, ausgebildet. Dabei umfasst das galvanische Element zumindest eine Zelle. Besonders bevorzugt ist das galvanische Element als Lithium-Ionen-Akkumulator ausgebildet. Dank einer derartigen Ausbildung des Beaufschlagungsmittels lässt sich ein Prüfling unter quasi realen Bedingungen erproben.

In einer vorteilhaften Weiterbildung ist das galvanische Element bevorzugt derart angeordnet, dass der Massestrom entgegen der Schwerkraft aus dem galvanischen Element austritt. Dies bietet den Vorteil, dass bei einer solchen stehenden Anordnung im Gegensatz zu einer hängenden Anordnung vor dem Austreten des Massestroms kein oder nur wenig brennbarer, flüssiger Elektrolyt aus dem galvanischen Element austreten kann und somit eine unkontrollierten Verbrennung oder sogar einer Verpuffung entgegengewirkt ist.

In einer weiteren vorteilhaften Weiterbildung kann es vorgesehen sein, dass ein Brennstoff für das Beaufschlagungsmittel zur Bereitstellung des Massestrom zumindest vor dem Beginn der Beaufschlagung und nach der Beaufschlagung gewägt wird, bevorzugt erfolgt das Wägen kontinuierlich während der Beaufschlagung. Somit wird die Masse des Brennstoffs vor bzw. nach der Beaufschlagung bzw. während der Beaufschlagung ermittelt, so dass ein Vergleich mit dem Brennstoffverbrauch anderer Versuche getroffen werden kann und somit eventuelle fehlerhafte Beaufschlagungsmittel zu ermitteln. Das Wägen kann mittels einer Massemesseinreichung, beispielsweise in Form einer Waage erfolgen.

In einer vorteilhaften Weiterbildung kann es vorgesehen sein, dass der Massestrom durch eine Düse hindurchströmt und dadurch die Emissionscharakteristik des Massestroms eingestellt wird. Dabei strömt der Massestrom ausgehend von dem Beaufschlagungsmittel durch eine Düse hindurch und trifft nach dem Passieren der Düse auf den Prüfling, wobei bevorzugt die Düse von dem Prüfling beabstandet ist. Die Düse weist eine vorbestimmte Düsengeometrie auf, die derart ausgebildet ist, dass die Emissionscharakteristik des von dem Beaufschlagungsmittel bereitgestellten Massestroms entsprechend zu verändern und anzupassen und somit den realen Bedingungen des Thermal Runaway anzupassen, insbesondere hinsichtlich Temperatur, Strahlöffnungswinkel und Impuls. Dank dem Einsatz einer Düse kann der Massestrom so verändert werden, dass die Emissionscharakteristik noch mehr den realen Bedingungen, beispielsweise dem Versagen eines Lithium-Ionen-Akkumulators entspricht. Insbesondere können folgende geometrischen Charakteristika der Düse variiert werden: zentrale Düsenbohrung, Öffnungswinkel des Konus, Länge der zentralen Düsenbohrung und Länge des Konus.

Bevorzugt kommt eine Düse in Kombination mit einer Raketentreibladung zum Einsatz.

Weiterhin wird eine Prüfvorrichtung zur thermomechanischen Prüfung eines Prüflings vorgeschlagen, umfassend eine einen Aufnahmeabschnitt aufweisende Halterung, in dem der Prüfling direkt oder indirekt aufnehmbar ist, und ein Beaufschlagungsmittel zur Bereitstellung eines thermisches Hochgeschwindigkeits-Massestroms der auf den Prüfling richtbar ist, wobei die Prüfvorrichtung eine Bestimmungseinrichtung aufweist, die eine mit der Halterung wirkmäßig gekoppelten Kraftmesseinrichtung umfasst, die derart eingerichtet ist, die durch den Massestrom in den Prüfling eingetragene Kraft zu ermitteln zur Bestimmung eines Kraft-Zeit-Verlaufs.

Dank der erfindungsgemäßen Prüfvorrichtung kann ein Material ohne hohen Aufwand und Kosten hinsichtlich seiner brandschutztechnischen Eigenschaften erprobt bzw. vorausgewählt werden.

Die Prüfvorrichtung ist bevorzugt dazu geeignet, dass zuvor beschriebene Verfahren mit all den zuvor genannten Weiterbildungen durchzuführen. Somit lassen sich alle zuvor genannten Merkmale des Verfahrens und deren vorteilhafte Weiterbildungen entsprechend auf die Prüfvorrichtung übertragen. Ebenso lassen sich sämtliche Merkmale der Prüfvorrichtung und deren nachfolgend ausgeführten Weiterbildungen auf das Verfahren und deren vorteilhaften Weiterbildungen übertragen.

Die Prüfvorrichtung weist eine Bestimmungseinrichtung auf. Dank dieser Bestimmungseinrichtung lassen sich Messwerte vor und/oder während und/oder nach der Beaufschlagung ermitteln. Bevorzugt umfasst die Bestimmungseinrichtung zumindest eines der nachfolgenden Mittel: Zeitmesseinrichtung, Temperaturmesseinrichtung, akustische Messeinrichtung, Infrarotkamera, Hochgeschwindigkeitsmesseinrichtung, Datenerfassungseinrichtung. Die Bestimmungseinrichtung kann diese einzeln oder in Kombination aufweisen.

Weiterhin kann aufgrund der reproduzierbaren Bedingungen (und deren Messung) die relative Beständigkeit von Prüflingen anhand der Oberflächenschädigung und/oder der Rückseitentemperatur verglichen werden, auch wenn diese nicht durchbrennen, und somit ein effizientes pre-screening (Vorauswahl) von Varianten von Prüflingen durchgeführt werden, um den "besten" Prüfling weiteren, weitaus aufwendigeren Brandschutztests zu unterziehen.

Bevorzugt ist die Bestimmungseinrichtung zur Bestimmung einer Durchbrennbeständigkeit des Prüflings ausgebildet, insbesondere zur Bestimmung der zeitlichen Durchbrennbeständigkeit des Prüflings.

Somit kann die genaue Bestimmung der Zeitspanne bis zum Durchbrennen des Prüflings erfolgen.

Erfindungsgemäß ist es vorgesehen, dass die Bestimmungseinrichtung eine mit der Halterung wirkmäßig gekoppelten Kraftmesseinrichtung umfasst, die dazu eingerichtet ist, die durch den Massestrom in den Prüfling eingetragene Kraft zu ermittelr , zur Bestimmung eines Kraft-Zeit-Verlaufs.

Somit kann mittels der Prüfvorrichtung die kontinuierlich über die gesamte Zeit der Beaufschlagung die durch den thermischen Hochgeschwindigkeits-Massestroms in den Prüfling eingetragene Kraft ermittelt werden. Somit lassen sich Schwankungen des Massestroms einfach ermitteln, so dass diese bei der Auswertung des Versuchs entsprechend berücksichtigt werden können. Somit kann die Prüfgenauigkeit weiter erhöht werden.

Weiterhin kann die Zeitspanne zwischen dem Beginn der Beaufschlagung und dem Eintritt eines auf ein Durchbrennen des Prüflings basierenden bzw. resultierenden Kraftabfalls ermittelt werden. Dazu ist die Kraftmesseinrichtung bevorzugt derart ausgebildet, dass diese die Kraft über die Zeit der Beaufschlagung kontinuierlich erfasst.

Die Halterung der Prüfvorrichtung weist den Aufnahmeabschnitt auf, in dem der Prüfling direkt oder indirekt, sprich mit einem Zwischenelement, aufnehmbar ist. Bevorzugt ist der Aufnahmeabschnitt als Ausnehmung oder als Öffnung ausgebildet, in die der Prüfling oder das Zwischenelement aufnehmbar ist, so dass der Prüfling gegenüber dem Aufnahmeabschnitt bevorzugt unverschiebbar und positionsgenau zumindest in Wirkrichtung des Massestroms gehalten ist.

Die Halterung kann wirkmäßig mit der Kraftmesseinrichtung gekoppelt sein, wobei die Kraftmesseinrichtung derart eingerichtet ist, die durch den Massestrom in den Prüfling eingetragene Kraft zu ermitteln. Mit anderen Worten ist die Halterung und somit deren Aufnahmeabschnitt so mit der Kraftmesseinrichtung zumindest wirkmäßig verbunden, dass ein Kraftfluss zwischen dem in dem Aufnahmeabschnitt aufnehmbaren Prüfling und der Kraftmesseinrichtung gewährleistet ist. Somit kann die durch den Massestrom in den Prüfling eigetragenen Kraft durch die Kraftmesseinrichtung ermittelt werden.

Das Beaufschlagungsmittel ist derart ausgebildet, einen thermischen Hochgeschwindigkeits-Massestrom bereitzustellen, wobei das Beaufschlagungsmittel so ausgerichtet ist, dass der Massestrom auf den in dem Aufnahmeabschnitt aufnehmbaren Prüfling treffen würde. Mit anderen Worten zielt das Beaufschlagungsmittel auf die durch den Aufnahmeabschnitt vorbestimmte Position für den Prüfling.

In einer vorteilhaften Weiterbildung umfasst die Halterung ein temperatur- und feuerbeständiges Material, beispielsweise aus Stahl und/oder einen keramischen Werkstoff. Damit kann sichergestellt werden, dass bei der Beaufschlagung des Prüflings die Halterung durch den Massestrom nicht beschädigt wird, so dass die Lebensdauer der Prüfvorrichtung erhöht ist.

In einer vorteilhaften Weiterbildung kann die Kraftmesseinrichtung eine Kraftaufnehmer umfassen. Kraftaufnehmer werden auch als Kraftsensor oder Kraftmessdose bezeichnet. Insbesondere kann der Kraftaufnehmer als Piezo-Kraftaufnehmer ausgebildet sein. Bevorzugt ist die Kraftmesseinrichtung zwischen der Halterung und einer starren Abstützstruktur, beispielsweise einem Maschinenbett, Fundament oder einer Konsole angeordnet. In einer bevorzugten Weiterbildung weist die Kraftmesseinrichtung eine Nennkraft zwischen 250 N und 750 N, besonders bevorzugt 500 N auf.

Es kann in einer bevorzugten Weiterbildung vorgesehen sein, dass die Kraftmesseinrichtung lediglich auf Druck oder auf Zug kalibriert ist, da der Massestrom eine Kraft mit einem vorbekannten Richtungssinn in den Prüfling einträgt und somit entweder eine Druckkraft oder eine Zugkraft wirkt. Somit kann die Genauigkeit verbessert und der Kalibriervorgang vereinfacht werden. Insbesondere eignen sich zum Kalibrieren Normgewichte von 1kg oder 5kg.

In einer alternativen Ausführungsvariante kann die Kraftmesseinrichtung mittels der Messung einer Verschiebung (Weg) der Halterung gegenüber einer starren Konsole erfolgen, wobei zwischen der Halterung und der Konsole ein elastisches Element angeordnet ist. Das elastische Element kann zumindest ein Federelement umfassen, beispielsweise in Form einer Spiralfeder oder einer Tellerfeder. Da die Steifigkeit des elastischen Elements bekannt ist, kann aufgrund der Verschiebung der Halterung gegenüber der starren Konsole die auf die Halterung wirkende Kraft berechnet werden. In einer vorteilhaften Weiterbildung ist es denkbar und möglich, mittels eines Hebelmechanismus die Verschiebung der Halterung zu übersetzten, so dass die Messgenauigkeit weiter erhöht werden kann. Weiterhin kann es vorgesehen sein, dass zusätzlich ein Dämpfungselement zwischen der Halterung und der starren Konsole angeordnet ist. Damit lassen sich Schwingungen im System dämpfen und die Messung der Kraft kann weiter verbessert werden.

In einer vorteilhaften Weiterbildung kann die Bestimmungseinrichtung ein Temperaturmesseinrichtung zur Bestimmung der Temperatur des Prüflings aufweisen. Die Temperaturmesseinrichtung umfasst bevorzugt ein Thermoelement und/oder ein Thermometer und/oder ein Infrarotthermometer. Die Temperaturmesseinrichtung umfasst bevorzugt mehrere Thermoelemente und/oder mehrere Thermometer und/oder mehrere Infrarotthermometer. Die Temperaturmesseinrichtung kann bevorzugt als analoge oder digitale Messeinrichtung ausgebildet sein. Bevorzugt ist dieses auf der dem Beaufschlagungsmittel abgewandten Seite des Aufnahmeabschnitts bzw. des Prüflings angeordnet oder auf diese gerichtet, sprich es bestimmt die Temperatur der Rückseite des Prüflings bzw. bei dem Einsatz mehrere Thermoelemente und/oder mehrere Thermometer und/oder mehrere Infrarotthermometer die Temperatur und deren Verteilung auf der Rückseite des Prüflings. Die dem Beaufschlagungsmittel abgewandte Seite entspricht der dem Massestrom abgewandten Seite des Prüflings.

In einer weiteren vorteilhaften Weiterbildung ist das Beaufschlagungsmittel in einer Sacklochöffnung eines Trägerelements aufgenommen ist. Das Trägerelement kann dabei als ein einseitig verschlossenes Rohr ausgebildet sein, welches eine topfartige Ausnehmung aufweist, in die das Beaufschlagungsmittel aufgenommen ist und in vorteilhafter Weise positionsgenau gehaltert ist. Bevorzugt weist das Trägerelement eine Arretiereinrichtung auf, die das Beaufschlagungsmittel gegenüber dem Trägerelement festlegt, so dass das Beaufschlagungsmittel gegen ein Herausfallen aus dem Trägerelement gesichert ist. Die Arretiereinrichtung kann als kraftschlüssige Arretiereinrichtung, beispielsweise als Klemmvorrichtung, und/oder als formschlüssige Arretiereinrichtung, beispielsweise ein Riegelelement oder Rastelemente, ausgebildet sein. Das Trägerelement kann lösbar oder unlösbar mit der Konsole verbunden sein. Bei einer lösbaren Ausbildung ist das Trägerelement austauschbar, so dass dieses jeweils passend zu dem Beaufschlagungsmittel ausgetauscht werden kann. Somit ist die Prüfvorrichtung universell einsetzbar und nicht auf ein bestimmtes Beaufschlagungsmittel beschränkt.

In einer vorteilhaften Ausführungsvariante ist das Beaufschlagungsmittel gegenüber der Halterung verstellbar. Somit lässt sich das Beaufschlagungsmittel in eine gewünschte Position gegenüber der Halterung und deren Aufnahmeabschnitt und letztendlich gegenüber dem Prüfling positionieren, so dass der Prüfling in gewünschter Weise von dem Massestrom beaufschlagbar ist. Bevorzugt ist es vorgesehen, dass das Trägerelement verstellbar an der Konsole gehalten ist.

Bevorzugt kann es vorgesehen sein, dass ein Winkel und/oder ein Abstand des Beaufschlagungsmittels gegenüber der Halterung einstellbar ist. Somit kann das Beaufschlagungsmittel derart eingestellt werden, dass der Massestrom orthogonal oder in einem Winkel auf den Prüfling trifft. Weiterhin ist der Abstand zwischen Beaufschlagungsmittel und der Halterung und dessen Aufnahmeabschnitt und somit auch bezogen auf einen im Aufnahmeabschnitt aufnehmbaren Prüfling einstellbar. Bevorzugt kann dabei das Trägerelement schwenkbar an der Konsole gehalten sein. Alternativ oder zusätzlich kann das Trägerelement translatorisch verlagerbar an der Konsole gehalten sein, so dass der Abstand des Trägerelements gegenüber der Halterung einstellbar ist und/oder das Trägerelement parallel zu dem Aufnahmeabschnitt bzw. dem Prüfling verstellbar ist, so dass bei einem eingestellten Winkel des Beaufschlagungsmittels dieses auf den Aufnahmeabschnitt bzw. den Prüfling gerichtet ist, sprich so dass der Massestrom bevorzugt mittig auf den Prüfling trifft. Bevorzugt ist der einstellbare Winkel zwischen 0° und 60°, besonders bevorzugt zwischen 0° und 45°. Dabei entspricht ein Winkel von 0° einem orthogonal auf den Aufnahmeabschnitt bzw. den Prüfling gerichteten Massestrom.

Bevorzugt weist die Prüfvorrichtung ein Prallblech auf, welches auf der dem Beaufschlagungsmittels abgewandten Seite des Aufnahmeabschnitts angeordnet ist. Dieses Prallblech ist bevorzugt aus einem temperatur- und feuerbeständigen Werkstoff gebildet oder umfasst einen solchen, beispielsweise Stahl oder einem keramischen Werkstoff. Prallblech ist dabei nicht so zu verstehen, dass dieses zwangsweise aus einem Blech gebildet sein muss. Alternativ kann das Prallblech auch als Prallelement bezeichnet werden. Das Prallblech ist in der Flucht des Massestroms angeordnet, so dass dieser nach dem Durchbrennen des Prüflings mittels des Prallblechs in eine vorbestimmte Richtung gelenkt wird. Somit lässt dich der Massestrom in Richtung einer Abzugseinrichtung lenken. Bevorzugt ist das Prallblech gegenüber der Halterung rotatorisch und/oder translatorisch verstellbar. Somit lässt sich das Prallblech an die Einstellposition des Beaufschlagungsmittels derart anpassen, dass der Massestrom in die gewünschte Richtung lenkbar ist, bevorzugt in Richtung der Abzugseinrichtung. Bevorzugt ist das Prallblech kraftmäßig entkoppelt von der Kraftmesseinrichtung angeordnet. Damit kann sichergestellt werden, dass die Kraftmesseinrichtung lediglich die in den Prüfling eingetragenen Kraft ermittelt und die Messung nicht durch das Auftreffen des Massestroms auf das Prallblech nach dem Durchbrennen diese verfälscht.

In einer vorteilhaften Weiterbildung ist ein Prüflingshalter vorgesehen, in dem der Prüfling aufnehmbar ist, wobei der Prüflingshalter in dem Aufnahmeabschnitt aufgenommen ist. Dank eines Prüflingshalters lassen sich die Prüflinge einfach, komfortabel und zeitsparend auf der Prüfvorrichtung aufnehmen. Der Prüflingshalter weist bevorzugt ein Maschengitter auf, welches über den Prüfling legbar ist. Somit ist der Prüfling sicher auf dem Prüflingshalter angeordnet. Bevorzugt ist der Prüflingshalter aus einem Stahl oder ein Aluminium gebildet oder umfasst einen solchen Werkstoff.

Bevorzugt ist das Maschengitter aus einem hochtemperaturbeständigen und thermoschockbeständigen Material, vorzugsweise aus Faserverbundkeramik. Bevorzugt handelt es sich bei der Faserverbundkeramik um eine keramikfaserverstärkte Keramik. Vorteilhaft handelt es sich bei den Fasern um orientierte Langfasern. Bevorzugt handelt es sich bei dem Gitter um ein Gelege von keramischen Langfasern, die in eine keramische Matrix eingebettet sind. Besonders bevorzugt bestehen die keramischen Langfasern oder/und die Matrix aus einem metalloxidkeramischen Material wie Aluminiumoxid oder Mullit. Aber auch andere keramische Materialien für die Fasern oder/und die Matrix sind möglich. Aus dem Stand der Technik ist eine Vielzahl grundsätzlich geeigneter Materialien sowohl für die Matrix als auch für die Fasern bekannt.

Es hat sich gezeigt, dass ein derartiges Maschengitter hohe thermische Belastungen standhalten kann, so dass dies insbesondere für Prüflinge geeignet ist, welche ein organisches Dämmmaterial umfassen, da es bei diesen oftmals zu Bränden und Verpuffungen kommt.

Das Maschengitter weist bevorzugt eine zentrale Öffnung einen Flächeninhalt zwischen 3 cm² und 25 cm² auf, so dass der Massestrom ungehindert auf den Prüfling einwirken kann. Besonders bevorzugt weist die zentrale Öffnung bei einem gering streuenden Massestrom (Öffnungsraumwinkel des Massestroms kleiner 10°) einen Flächeninhalt zwischen 3 cm² und 7 cm², besonders 5 cm² auf. Besonders bevorzugt weist die zentrale Öffnung bei einem streuenden Massestrom

(Öffnungsraumwinkel des Massestroms größer 10°) einen Flächeninhalt zwischen 10 cm² und 20 cm².

Untersuchungen haben gezeigt, dass streuende Masseströme denen einer havarierten Batteriezelle weitestgehend entsprechen. Insbesondere ein Abstand zwischen dem Beaufschlagungsmittel und dem Prüfling zwischen 40mm und 60mm hat sich als vorteilhaft erwiesen. Eine ganz besonders vorteilhafte Anordnung weist einen Massestrom mit einem Öffnungsraumwinkel von 40° auf, wobei das Beaufschlagungsmittel zu dem Prüfling einen Abstand von 50mm aufweist, und die zentrale Öffnung des Maschengitters einen Flächeninhalt von 16 cm² aufweist.

Der Öffnungsraumwinkel ist der Öffnungswinkel des Kegels des Massestroms, wobei dieser das Doppelte des Winkels zwischen den Mantellinien und der Achse des Kegels beträgt.

Bevorzugt weist der Öffnungsraumwinkel einen Wert zwischen 3° und 10° auf. Vorzugsweise wird das Maschengitter mit einem Abstand zur Oberfläche des Prüflings fixiert. Dies kann beispielsweise derart erfolgen, in dem das Maschengitter entweder auf dem Prüflingshalter fixiert ist oder schwimmend auf dem Prüfling fixiert wird. Unter "schwimmender Lagerung" ist zu verstehen, dass das Maschengitter auf dem Prüfling aufliegt oder in einem definierten Abstand von diesem gehalten wird. Dabei wird das Maschengitter in Vertikalrichtung nach unten mit einer Kraft beaufschlagt, beispielsweise der Gewichtskraft des Maschengitters und der mit dem Maschengitter verbundenen Teile. Das schwimmend gelagerte Maschengitter kann weiterhin eine Vertikalführung aufweisen, die eine Bewegung des Maschengitters in Vertikalrichtung zulässt, es jedoch in der X-Y-Ebene fixiert. Bevorzugt beträgt der Abstand des Maschengitters gegenüber der Oberfläche des Prüflings zwischen 1 und 5 mm.

In einer vorteilhaften Ausführung ist der Prüflingshalter rahmenartig ausgebildet ist, so dass der Prüfling darin einsetzbar ist. Dank einer solchen Ausführung kann sichergestellt werden, dass der Prüflingshalter während der Beaufschlagung des Prüflings durch den Massestrom dieser nicht beschädigt wird und/oder dieser keinen oder nur einen sehr geringen Einfluss auf die Messergebnisse hat.

In einer vorteilhaften Ausführung der Prüfvorrichtung kann eine Fixiervorrichtung zur Fixierung des Prüflings oder des Prüflingshalters an dem Aufnahmeabschnitt vorgesehen sein. Diese Fixiereinrichtung ist zwischen einer Fixierstellung und einer Freigabestellung umschaltbar, so dass in der Fixierstellung der Prüfling oder der Prüflingshalter gegenüber dem Aufnahmeabschnitt festgesetzt ist und in der Freigabestellung der Prüfling oder der Prüflingshalter in den Aufnahmeabschnitt aufnehmbar bzw. entnehmbar ist. Die Fixiervorrichtung kann als Klemmvorrichtung ausgebildet sind, beispielsweise als Klemm- oder Spannhebel. Alternativ oder zusätzlich kann die Fixiervorrichtung als formschlüssige Rastvorrichtung ausgebildet sein. Weiterhin kann die Fixiervorrichtung auch Schraubenelemente wie Schrauben, Muttern oder Stehbolzen gebildet sein. Die Fixiervorrichtung sorgt dafür, dass der Prüfling oder der Prüflingshalter sich während der Beaufschlagung durch den Massestrom nicht verschiebt. Eine solche Fixiereinrichtung kann in einer vorteilhaften Weiterbildung auch zusätzlich an dem Prüflingshalter vorgesehen sein, um den Prüfling gegenüber dem Prüflingshalter festzusetzen.

In einer vorteilhaften Weiterbildung kann die Bestimmungseinrichtung eine Hochgeschwindigkeitskamera und/oder eine Infrarotkamera und/oder eine akustische Messeinrichtung umfassen. Mittels der Infrarotkamera kann eine Thermofotografie und/oder eine Thermografie des Prüflings aufgezeichnet werden. Diese Infrarotkamera ist auf den Aufnahmeabschnitt bzw. dem dort einsetzbaren Prüfling gerichtet. Bevorzugt ist diese auf die dem Beaufschlagungsmittel gegenüberliegende Seite des Aufnahmeabschnitts bzw. des dort einsetzbaren Prüflings gerichtet. Somit lässt die Thermofotografie bzw. Thermografie der Rückseite des Prüflings aufzeichnen. Mittels der Hochgeschwindigkeitskamera, auch als Highspeed-Kamera bezeichnet, kann eine Filmaufnahme der Beaufschlagung des Prüflings mit dem Massestrom aufgezeichnet werden. Dazu ist die Hochgeschwindigkeitskamera auf einen in dem Aufnahmeabschnitt aufnehmbaren Prüfling gerichtet, bevorzugt derart, dass die Filmaufnahme von dem Auftreffen des Massestrom auf den Prüfling und/oder auf der dem Massestrom abgewandten Seite des Prüflings aufzeichenbar ist. Bevorzugt ist die Hochgeschwindigkeitskamera derart eingerichtet, dass einer Bildfrequenz von mehr als 30 Bilder pro Sekunde, besonders bevorzugt von mehr als 100 Bilder pro Sekunde aufzeichenbar sind. Bevorzugt kann die Hochgeschwindigkeitskamera eine optische Filtereinrichtung umfassen, die beispielsweise wie eine Art Schweißerbrille wirkt. Dadurch lassen sich die Filmaufnahmen der Beaufschlagung verbessern. Es können auch zwei Hochgeschwindigkeitskameras vorgesehen sein, wobei eine der Hochgeschwindigkeitskameras einen optische Filtereinrichtung umfasst und diese bevorzugt auf den Auftreffabschnitt des Massestrom auf dem Prüfling gerichtet ist. Bevorzugt ist die akustische Messeinrichtung als Mikrophon ausgebildet. Besonders bevorzugt ist dieses Mikrophon als Richtmikrophon ausgebildet und ist dabei auf das Beaufschlagungsmittel oder auf den Prüfling gerichtet. Es kann vorgesehen sein, dass die Prüfvorrichtung zwei Mikrophone aufweist, wobei das eine auf das Beaufschlagungsmittel und das andere auf den Prüfling gerichtet ist. Die akustische Messeinrichtung bietet den Vorteil, dass diese nicht durch eine Rauchentwicklung während der Beaufschlagung in ihren Messeigenschaften beeinträchtigt ist.

In einer vorteilhaften Weiterbildung kann es vorgesehen sein, dass die Infrarotkamera und /oder Hochgeschwindigkeitskamera und/oder die akustische Messeinrichtung verstellbar an der Konsole gehaltert ist. Somit kann die Infrarotkamera und /oder Hochgeschwindigkeitskamera optimal auf den Auftreffabschnitt des Massestroms gerichtet werden.

In einer weiteren vorteilhaften Weiterbildung weist die Prüfvorrichtung eine Abzugseinrichtung und/oder eine Gebläseeinrichtung auf oder ist mit einer solchen verbindbar.

Durch die Abzugseinrichtung lassen sich die durch den Massestrom entstehenden Gase und Rauch absaugen. Beispiels kann diese auf der dem Massestrom abgewandten Seite des Aufnahmeabschnitts bzw. des Prüflings angeordnet, so dass der Massestrom nach dem Durchbrennen zumindest teilweise absaugbar ist. Alternativ oder zusätzlich kann die Abzugseinrichtung auch auf der dem Massestrom zugewandten Seite des Aufnahmeabschnitts angeordnet sein, so dass mittels dieser während der Beaufschlagung entstehender Rauch abgesaugt werden kann. Dies bietet den Vorteil, dass bei einem Einsatz einer Hochgeschwindigkeitskamera die Sicht auf den Prüfling während der Beaufschlagung freigehalten wird und diese nicht durch Rauch beeinträchtigt ist. Somit kann die Genauigkeit der Prüfung, beispielsweise bei der Bestimmung der zeitlichen Durchbrennbeständigkeit, mittels der Hochgeschwindigkeitskamera weiter verbessert werden.

Die Abzugseinrichtung kann Teil der Prüfvorrichtung sein oder ist mit einer solchen beispielsweise mittels eines Schlauches verbindbar. Die Abzugseinrichtung umfasst bevorzugt einen Nasswäscher und/oder einen Schwebstofffilter (HEPA Filter = High-Efficiency Particulate Air/Arrestance Filter). Dieser Nasswäscher dient zum Auswaschen von gesundheits- und umweltgefährdenden Bestandteilen, beispielweise Säuren, und Rauchgasen. Der HEPA-Filter reinigt Ruß, Feinstpartikel und Stäube.

Die Gebläseeinrichtung kann alternativ oder zusätzlich zu seiner Abzugseinrichtung vorgesehen sein, wobei diese bevorzugt auf der dem Massestrom zugewandten Seite des Aufnahmeabschnitts angeordnet ist. Die Gebläseeinrichtung ist dabei so eingerichtet und angeordnet, dass diese den während der Beaufschlagung entstehenden Rauch mittels eines Fluidstroms, insbesondere Luftstrom, so wegbewegt. Dies bietet den Vorteil, dass bei einem Einsatz einer Hochgeschwindigkeitskamera die Sicht auf den Prüfling während der Beaufschlagung freigehalten wird und diese nicht durch Rauch beeinträchtigt ist. Somit kann die Genauigkeit der Bestimmung der zeitlichen Durchbrennbeständigkeit mittels der Hochgeschwindigkeitskamera weiter verbessert werden. Dabei ist der Fluidstrom so zu bemessen, dass dieser den Massestrom während der Beaufschlagung nur unwesentlich und technisch vernachlässigbar beeinflusst.

Bevorzugt kann die Gebläseeinrichtung eine Druckluftlanze zur Leitung des Fluidstroms umfassen, die mit einem Druckluftschlauch verbindbar ist zum Anschluss der Druckluftlanze an eine pneumatische Anlage. Alternativ oder zusätzlich kann die Gebläseeinrichtung einen Ventilator und/oder einen Verdichter umfassen.

In einer weiteren vorteilhaften Weiterbildung der erfindungsgemäßen Prüfvorrichtung ist die Kraftmesseinrichtung von einer Abschirmung oder einer Kapselung zumindest teilweise umschlossen ist. Besonders bevorzugt ist die Kraftmesseinrichtung von einer Kapselung vollständig umschlossen, wobei eine elektrische Leitung durch die Kapselung abgedichtet hindurchgeführt ist. Bevorzugt ist die Abschirmung oder Kapselung eine dichtende thermische Kapselung. Somit wird ein negativer Störeinfluss der durch den Massestrom ausgesonderten Gase und Partikel auf die Kraftmesseinrichtung zumindest stark reduziert, so dass eine Verfälschung der Kraftmessung entgegengewirkt ist und somit die Messgenauigkeit der Prüfvorrichtung weiter verbessert ist.

In einer vorteilhaften Weiterbildung kann eine Strahlgeschwindigkeitsmesseinrichtung zur Bestimmung der Strahlgeschwindigkeit des Massestroms vorgesehen sein. Die Strahlgeschwindigkeitsmesseinrichtung kann auch als Strömungsgeschwindigkeitsmesseinrichtung bezeichnet werden. Bevorzugt ist die Strahlgeschwindigkeitsmesseinrichtung ein Dopplerspektroskop. Bevorzugt kann die Strahlgeschwindigkeitsmesseinrichtung zwischen dem Aufnahmeabschnitt und dem Beaufschlagungsmittel angeordnet sein, so dass die Strahlgeschwindigkeit räumlich vor dem Auftreffen des Massestroms auf den Prüfling bestimmbar ist. Alternativ oder zusätzlich kann die oder eine weitere Strahlgeschwindigkeitsmesseinrichtung auf der dem Beaufschlagungsmittel abgewandten Seite des Aufnahmeabschnitts bzw. des Prüflings angeordnet sein. Somit lässt sich die Strahlgeschwindigkeit nach dem Durchbrennen des Prüflings ermitteln.

In einer vorteilhaften Weiterbildung ist das Beaufschlagungsmittel derart ausgebildet, einen Impuls zwischen 1 Newtonsekunde (Ns) und 250 Ns bereitzustellen, besonders bevorzugt einen Impuls zwischen 1Ns und 100Ns.

In einer weiteren vorteilhaften Weiterbildung ist das Beaufschlagungsmittel derart ausgebildet, den Massestrom für eine Strömungsdauer zwischen 2 Sekunden und 30 Sekunden, besonders bevorzugt für eine Strömungsdauer zwischen 5 Sekunden und 25 Sekunden bereitzustellen. Somit lässt sich sicherstellen, dass der Massestrom den Prüfling eine ausreichende Zeit beaufschlägt, so dass die zeitliche Durchbrennbeständigkeit bestimmt werden kann, und dass der Massestrom nach dem Durchbrennen nicht eine unnütze Zeit weiter strömt. Mit anderen Worten lässt sich die Strömungsdauer an die Beschaffenheit des Prüflings anpassen oder an die Strömungsdauer des zu simulierenden Brandfalles beispielsweise des Thermal Runaway eines Lithium-Ionen-Akkumulator.

Bevorzugt ist der Brennstoff des Beaufschlagungsmittel derart gewählt, dass der Massestrom eine vorgesehene Strömungsgeschwindigkeit, Impuls, Temperatur, Öffnungswinkel und chemische Zusammensetzung aufweist. Es kann vorgesehen sein, dass Brennstoffbereitstellungseinrichtung den Brennstoff gemäß eines Anforderungsprofils derart anpasst und dem Beaufschlagungsmittel zuleitet. Somit ist es denkbar und möglich, den Brennstoff und deren Menge vor oder sogar während der Beaufschlagung anzupassen. Somit kann der Massestrom entsprechend den vorgesehenen Versuchsparametern angepasst werden.

In einer bevorzugten Ausführung weist das Beaufschlagungsmittel eine Einrichtung auf, die derart ausgebildet ist, dem Massestrom Partikel beizumengen. Der Massestrom ist dabei bevorzugt ein gasförmiger Strom. Somit kann beispielsweise die durch den Massestrom in den Prüfling eingetragene Kraft angepasst werden.

Bevorzugt kann es vorgesehen sein, dass die Prüfvorrichtung ein Massemesseinreichung zur Bestimmung der Masse eines für das Beaufschlagungsmittel vorgesehenen Brennstoffes. Diese Massemesseinrichtung kann beispielsweise in Form einer Waage ausgebildet sein. Alternativ kann auch das Volumen des Brennstoffs ermittelt werden, so dass daraus die Masse bestimmbar ist.

In einer vorteilhaften Weiterbildung weist das Beaufschlagungsmittel eine Düse auf oder ist mit einer solchen koppelbar. Bevorzugt weist die Düse einen Düsenaustrittskanal auf, der eine vorbestimmte Länge und einen vorbestimmten Öffnungsquerschnitts und einen vorbestimmten Öffnungswinkel aufweist. Somit weist die Düse eine vorbestimmte Düsengeometrie am austrittseitigen Ende auf. Die Düsengeometrie kann so gewählt werden, dass sich mit einem gleichen Typ des Beaufschlagungsmittel unterschiedliche Emissionscharakteristiken einstellen lassen, beispielsweise kann dadurch die Auftrefffläche des Massestroms und/oder die Auftreffgeschwindigkeit und der Impuls des Massestroms einstellen. Die Düsengeometrie ist beispielsweise durch die Länge des Düsenaustrittskanals (entspricht der Länge des Austrittskegels, auch als Austrittskonus bezeichnet) und Öffnungsquerschnitts (Durchmesser der Austrittsöffnung) und Öffnungswinkel (Kegelöffnungswinkel der Austrittsöffnung) bestimmt. Somit kann der Impuls und die Auftrefffläche gezielt angepasst werden.

Der Öffnungswinkel des Düsenaustritts kann entsprechend der gewünschten Emissionscharakteristik gewählt werden. Beispielsweise könnte dieser auch Null betragen, so dass der Düsenaustritt durch einen kreiszylindrischen Kanal gebildet ist. Bevorzugt weist der Öffnungswinkel einen Wert zwischen 45° und 135° auf. Der Öffnungswinkel entspricht dem Doppelten des Winkels zwischen den Mantellinien und der Achse des Kegels.

Dank dieser Anpassbarkeit der Düsengeometrie kann die Emissionscharakteristik von unterschiedlichen Lithium-Ionen-Akkumulatoren im Versagensfall (auch als thermal runaway bezeichnet) nachempfunden werden, insbesondere hinsichtlich Öffnungswinkel des Auswurfskegels (Austrittskegel, Düsenaustrittskanal) der heißen Gase und Partikel, Temperatur am Auftreffort, integraler Masseimpuls an der Auftrefffläche, Masseimpuls pro Fläche, Strahlgeschwindigkeit.

Die Düse kann alternativ auch an dem das Beaufschlagungsmittel aufnehmende Trägerelement angeordnet sein. Somit können Düsen mit unterschiedlichen Geometrien einfach an dem Trägerelement angebracht werden und somit der Massestrom des Beaufschlagungsmittel durch diese hindurchgeleitet werden. Es kann vorgesehen sein, dass die Düse eine verstellbare Düsengeometrie aufweist, die bevorzugt auch während der Beaufschlagung verstellbar ist. Somit kann der Massestrom bzgl. seiner Strömungseigenschaften über die Beaufschlagungsdauer weiter vergleichmäßigt werden.

In einer vorteilhaften Ausführung der erfindungsgemäßen Prüfvorrichtung ist das Beaufschlagungsmittel als eine Raketentreibladung, ein Acetylenbrenner mit Masseeinspeisung, eine Flammspritzeinrichtung, ein galvanisches Element oder eine Plasmaspritzeinrichtung ausgebildet. Die Raketentreibladung kann auch als Rakete oder als Raketenmotor bezeichnet werden.

Bevorzugt ist die Raketentreibladung eine Festkörper-Komposit-Treibladung. Diese Festkörper-Komposit-Treibladungen haben sich als besonders vorteilhaft erwiesen, da diese einen gleichmäßigeren Massestrom über die Zeit der Beaufschlagung bereitstellen und die Wiederholbarkeit erhöht ist, da die Toleranzen zwischen den einzelnen Treibladungen sehr gering sind.

Bevorzugt ist die Raketentreibladung mittels einer elektrischen Zündung aktivierbar. Dies ist einfach und praktikabel und lässt sich ohne hohen Aufwand realisieren.

In einer vorteilhaften Weiterbildung ist das galvanische Element als Sekundärelement, auch als Akkumulator bezeichnet, ausgebildet. Dabei umfasst das galvanische Element zumindest eine Zelle. Besonders bevorzugt ist das galvanische Element als Lithium-Ionen-Akkumulator ausgebildet. Dank einer derartigen Ausbildung des Beaufschlagungsmittels lässt sich ein Prüfling unter quasi realen Bedingungen erproben.

In einer vorteilhaften Weiterbildung ist das galvanische Element bevorzugt derart angeordnet, dass der Massestrom entgegen der Schwerkraft aus dem galvanischen Element austritt. Dies bietet den Vorteil, dass bei einer solchen stehenden Anordnung im Gegensatz zu einer hängenden Anordnung kein oder kaum brennbares, flüssiges Elektrolyt aus dem galvanischen Element ausdringen kann und somit eine unkontrollierten Verbrennung oder sogar einer Verpuffung entgegengewirkt ist.

In einer vorteilhaften Weiterbildung weist die Prüfvorrichtung und/oder die Bestimmungseinrichtung eine Datenerfassungseinrichtung auf. Diese kann beispielsweise als Computer ausgebildet sein. Die Datenerfassungseinrichtung ist bevorzugt zumindest mit einem der zuvor genannten Messeinrichtungen oder sämtlichen zuvor genannten Messeinrichtungen elektrisch verbunden und derart eingerichtet, die Messsignale der Messeinrichtung aufzuzeichnen.

In einer vorteilhaften Weiterbildung ist zwischen dem Beaufschlagungsmittel und dem Aufnahmeabschnitt ein Abschirmmittel und/oder eine Lenkeinrichtung angeordnet ist.

Dank eines derartig angeordneten Abschirmmittels kann sichergestellt werden, dass insbesondere bei einem geringen Abstand zwischen Beaufschlagungsmittel und Prüfling das Beaufschlagungsmittel durch die Reflektion des Massestroms nicht beschädigt oder zerstört wird. Bevorzugt ist das Abschirmmittel aus einem hochtemperaturbeständigen und thermoschockbeständigen Material, vorzugsweise aus Faserverbundkeramik, ausgebildet.

Dieses Abschirmmittel kann bevorzugt als Lochblende ausgebildet sein, die ein Loch aufweist, durch das der Massestrom hindurchströmen kann. Bevorzugt ist die Lochblende direkt an das Beaufschlagungsmittel montiert, so dass das Loch korrespondierend zu der Düse des Beaufschlagungsmittels ausgebildet ist. Alternativ kann das Abschirmmittel mit einem Abstand zu dem Beaufschlagungsmittel angeordnet sein. Dabei ist das Loch derart bemessen, dass der Massestrom ungehindert strömen kann. In einer besonders vorteilhaften Weiterbildung trifft der Massestrom in einem Winkel, sprich mit leichter Neigung auf den Prüfling, so dass die Reflektion des Massestroms mehrheitlich auf das Abschirmmittel trifft und das Beaufschlagungsmittel noch besser geschützt ist.

Dank einer derartigen Lenkeinrichtung lässt sich der Massestrom in seiner Ausbreitung entsprechend lenken. Bevorzugt ist die Lenkeinrichtung zwischen dem Beaufschlagungsmittel und dem Prüfling angeordnet, insbesondere ist die Lenkeinrichtung auf der dem Beaufschlagungsmittel zugewandten Seite des Prüflings im Auftreffabschnitt angeordnet. Es kann vorgesehen sein, dass die Lenkeinrichtung auf dem Prüfling fixiert ist, beispielsweise mittels Fixiermittel wie Schrauben. Es hat sich gezeigt, dass die Ausbildung der Lenkeinrichtung als Pyramide oder als Keil besonders vorteilhaft ist. Dank einer derartigen Ausbildung der Lenkeinrichtung lässt sich ein sogenannter Thermal Runaway eines Lithium-Ionen-Akkumulators realistischer als im Stand der Technik nachbilden. Bei einem solchen Thermal Runaway kommt es zu einem schnellen und massiven Auswurf von metallischen Batteriebestandteilen die zu einer Bildung einer pyramidenförmigen Ablagerung führen und somit die schnellen, heißen Gase entsprechend ablenken. Dies stellt eine gänzlich andere Emissionscharakteristik dar, als ein senkrecht auftreffender Strahl. Somit lässt sich mit der beschriebenen Lenkeinrichtung mittels der erfindungsgemäßen Prüfvorrichtung sehr real simulieren.

Durch eine Veränderung des Winkels der Lenkeinrichtung kann die Schädigungsintensität angepasst und eingestellt werden, wobei bei einem Winkel von 45° wird die Hauptintensität des Massestroms parallel zur Prüflingsoberfläche abgeleitet. Vorteilhaft sind Winkel zwischen 30° und 45° zwischen Strahlrichtung und Flächennormale der Lenkeinrichtung.

In einer vorteilhaften Weiterbildung ist die Lenkeinrichtung aus einem keramischen Werkstoff oder aus einem metallischen Werkstoff, insbesondere Stahl ausgebildet oder umfasst einen solchen.

Bevorzugt ist die Lenkeinrichtung als Keil ausgebildet, wobei dieser zwei den Massestrom leitende Oberflächen aufweist, wobei der Winkel der einen Oberfläche zu der Prüflingsoberfläche gleich oder ungleich dem Winkel der zweiten Oberfläche zu der Prüflingsoberfläche ist. Dadurch lassen sich die in der Realität vorherrschenden Bedingungen noch genauer auf der Prüfvorrichtung nachbilden.

Bevorzugt ist die Prüfvorrichtung zur Durchführung des zuvor dargestellten erfindungsgemäßen Verfahrens zur Prüfung eines Prüflings und deren Weiterbildungen geeignet, wobei die Prüfvorrichtung bevorzugt auch die zuvor genannten Weiterbildungen aufweisen kann.

Es wird darauf hingewiesen, dass die Merkmale der angegebenen Weiterbildungen und vorteilhaften Ausgestaltungen im Rahmen des technisch Möglichen frei miteinander kombiniert werden können, auch wenn dieses im Text nicht explizit angegeben ist. Dies gilt insbesondere auch über die Grenzen der Anspruchskategorien Vorrichtung und Verfahren hinweg.

Weitere Vorteile und Merkmale des erfindungsgemäßen Verfahrens und der erfindungsgemäßen Prüfvorrichtung ergeben sich aus den nachfolgenden Ausführungsbeispielen, die anhand der Figuren (Figur = Fig.) näher erläutert werden.

In diesen zeigen:
- Fig. 1:: eine schematisierte Darstellung eines ersten Ausführungsbeispiel einer erfindungsgemäßen Prüfvorrichtung vor der Beaufschlagung eines Prüflings mit einem thermischen Hochgeschwindigkeits-Massestrom,
- Fig. 2:: eine schematisierte Darstellung des ersten Ausführungsbeispiels der erfindungsgemäßen Prüfvorrichtung während der Beaufschlagung des Prüflings mit dem thermischen Hochgeschwindigkeits-Massestrom,
- Fig. 3:: eine schematisierte Darstellung des ersten Ausführungsbeispiels der erfindungsgemäßen Prüfvorrichtung nach dem Durchbrennen des Prüflings,
- Fig. 4a:: eine schematisierte Darstellung eines Kraft-Zeit-Diagramms mit einem Kraft-Zeit-Verlauf, der sich aus einer Durchführung eines erfindungsgemäßen Verfahrens ergibt,
- Fig. 4b:: eine schematisierte Darstellung eines Kraft-Zeit-Diagramms mit einem Kraft-Zeit-Verlauf, bei dem der Prüfling die Beaufschlagung ohne ein Durchbrennen überstanden hat,
- Fig. 5:: eine schematisierte Darstellung eines zweiten Ausführungsbeispiels einer erfindungsgemäßen Prüfvorrichtung während der Beaufschlagung eines Prüflings mit dem thermischen Hochgeschwindigkeits-Massestrom,
- Fig. 6:: eine schematisierte Darstellung des zweiten Ausführungsbeispiels der erfindungsgemäßen Prüfvorrichtung nach dem Durchbrennen des Prüflings,
- Fig. 7:: eine schematisierte Darstellung eines dritten Ausführungsbeispiels einer erfindungsgemäßen Prüfvorrichtung während der Beaufschlagung eines Prüflings mit dem thermischen Hochgeschwindigkeits-Massestrom,
- Fig. 8: eine schematisierte Darstellung eines vierten Ausführungsbeispiels einer erfindungsgemäßen Prüfvorrichtung während der Beaufschlagung eines Prüflings mit dem thermischen Hochgeschwindigkeits-Massestrom,
- Fig. 9:: eine schematisierte Darstellung eines fünften Ausführungsbeispiels einer erfindungsgemäßen Prüfvorrichtung während der Beaufschlagung eines Prüflings mit dem thermischen Hochgeschwindigkeits-Massestrom,
- Figur 10:: eine schematisierte Darstellung eines sechsten Ausführungsbeispiels einer erfindungsgemäßen Prüfvorrichtung während der Beaufschlagung eines Prüflings mit dem thermischen Hochgeschwindigkeits-Massestrom,
- Figur 11:: eine schematisierte Darstellung eines siebten Ausführungsbeispiels einer erfindungsgemäßen Prüfvorrichtung während der Beaufschlagung eines Prüflings mit dem thermischen Hochgeschwindigkeits-Massestrom,
- Figur 12:: eine schematisierte Darstellung eines nicht erfindungsgemäßen Vergleichsbeispiels einer Prüfvorrichtung während der Beaufschlagung eines Prüflings mit dem thermischen Hochgeschwindigkeits-Massestrom
- Figur 13:: eine schematisierte Darstellung eines **achten** Ausführungsbeispiels einer erfindungsgemäßen Prüfvorrichtung während der Beaufschlagung eines Prüflings mit dem thermischen Hochgeschwindigkeits-Massestrom,
- Figur 14:: eine schematisierte Schnittdarstellung einer Düse zur Einstellung der Emissionscharakteristik des Massestroms.

In den verschiedenen Figuren sind gleiche Teile stets mit den gleichen Bezugszeichen versehen und werden daher in der Regel auch jeweils nur einmal benannt bzw. erwähnt.

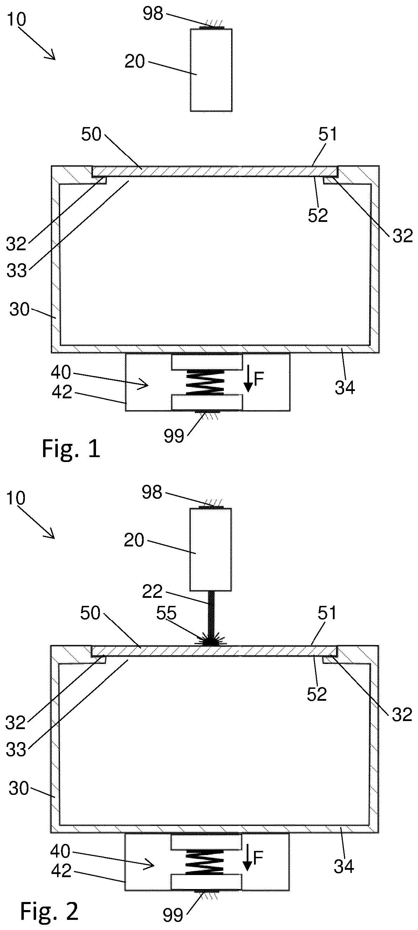

In den Figuren 1 bis 3 ist ein erstes Ausführungsbeispiel der erfindungsgemäßen Prüfvorrichtung 10 dargestellt. Die Prüfvorrichtung 10 dient zur Prüfung eines Prüflings 50 gem. dem erfindungsgemäßen Verfahrens. Die Prüfvorrichtung 10 weist eine einen Aufnahmeabschnitt 32 aufweisende Halterung 30 auf, in dem der Prüfling 50 direkt aufgenommen ist. Ein als Raketenmotor ausgebildetes Beaufschlagungsmittel 20 ist an einer festen unverschieblichen ersten Lagerung 98 gehalten, die hier schematisiert als Einspannung dargestellt ist. In der Figur 1 ist das Beaufschlagungsmittel 20 noch ungezündet und somit ist in dieser Figur 1 die Prüfvorrichtung vor der Beaufschlagung des Prüflings 50 durch einen thermischen Hochgeschwindigkeits-Massestrom 22 gezeigt. Der thermischen Hochgeschwindigkeits-Massestrom wird nachfolgend kurz als Massestrom bezeichnet. Das Beaufschlagungsmittel 20 ist so auf den Prüfling 50 gerichtet, dass der Massestrom 22 den Prüfling 50 trifft, wie dies der Figur 2 zu entnehmen ist.

Weiterhin weist die Prüfvorrichtung 10 eine mit der Halterung 30 wirkmäßig gekoppelten als Kraftmesseinrichtung 40 ausgebildete Bestimmungseinrichtung auf. Diese Kraftmesseinrichtung 40 ist als Kraftmessdose ausgebildet und in einem gekapselten Gehäuse 42 aufgenommen. Die Kraftmesseinrichtung 40 ist an einer unverschieblichen zweiten Lagerung 99 gehalten, so dass diese die durch den Massestrom in den Prüfling 50 eingetragene Kraft F ermittelt werden kann. Der plattenförmig ausgebildete Prüfling 50 ist in dem in den Figuren 1 bis 3 dargestellten ersten Ausführungsbeispiel der Prüfvorrichtung 10 direkt in dem Aufnahmeabschnitt 32 aufgenommen. Der Aufnahmeabschnitt 32 ist dazu als eine Ausnehmung 33 begrenzender Randabschnitt der Halterung 30 ausgebildet, wobei der Randabschnitt gestuft ausgebildet ist, so dass der Prüfling 50 dort sicher eingesetzt werden kann und gleichzeitig eine Abstützung des Prüflings 50 gewährleistet ist, wenn dieser mit dem Massestrom 22, wie in der Figur 2 dargestellt, beaufschlagt wird, so dass der Kraftfluss von dem Prüfling 50 über die Aufnahmeabschnitt 32 in die Halterung 30 eingeleitet wird und die Halterung 30 den Kraftfluss weiter auf die Kraftmesseinrichtung 40 überträgt. Der Prüfling 50 weist eine Vorderseite 51 und eine Rückseite 52 auf, wobei die Vorderseite 51 dem Beaufschlagungsmittel 20 zugewandt ist und die Rückseite 52 dem Beaufschlagungsmittel 52 abgewandt ist. Der Prüfling 50 liegt mit einem Randabschnitt der Rückseite 52 auf dem Aufnahmeabschnitt 32 auf, wobei der flächenmäßig größte Bereich der Rückseite 52 keinen Kontakt zum Aufnahmeabschnitt 32 aufweist, also kontaktfrei ist.

Die Halterung 30 ist hier schematisiert als topfartiges Bauteil bevorzugt aus einem Stahl ausgebildet, wobei diese einen Bodenabschnitt 34 aufweist, mit dem die Halterung 30 auf der Kraftmesseinrichtung 40 steht und somit mit dieser wirkmäßig gekoppelt ist, so dass der Kraftfluss von der Halterung 30 auf die Kraftmesseinrichtung 40 sichergestellt ist.

In der Figur 2 ist die Prüfvorrichtung der Figur 1 während der Beaufschlagung des Prüflings 50 mit dem Massestrom 22 dargestellt. Der Massestrom 22 wird durch das Bereitstellungsmittel 20, welches hier als Raketenmotor mit einer Festkörper-Komposit-Treibladung ausgebildet ist und auch als Beaufschlagungsmittel bezeichnet wird, nach dessen elektrische Zündung über eine durch die Beschaffenheit des Bereitstellungsmittel 20 vorbekannte Strömungsdauer bereitgestellt. Das Bereitstellungsmittel 20 ist auf den Prüfling 50 gerichtet, so dass der Massestrom 22 in einem Auftreffabschnitt 55 der Vorderseite 51 auf den Prüfling 50 trifft und eine Wärme und eine Kraft F in diesen einträgt. Der Auftreffabschnitt 55 kann auch als Auftreffpunkt bezeichnet werden. Das Beaufschlagungsmittel 20 stößt den Massestrom 22 aus und drückt mit diesem auf den Prüfling 50. Dieser leitet die Kraft F über die Aufnahmeabschnitt 32 in die Halterung 30 ein, die mit der Kraftmesseinrichtung 40 über den Bodenabschnitt 34 gekoppelt ist, so dass die in den Prüfling 50 durch den Massestrom 22 eingetragene Kraft F durch die Kraftmesseinrichtung bestimmt wird.

Dabei kann durch ein erfindungsgemäßes Verfahren die zeitlichen Durchbrennbeständigkeit des Prüflings 50 mittels der Bestimmungseinrichtung bestimmt werden, die hier eine Kraftmesseinrichtung umfasst. Wie in der Figur 2 ersichtlich, wird der Prüfling 50 mit dem thermischen Hochgeschwindigkeits-Massestrom 22 beaufschlagt und es wird die durch die Beaufschlagung auf den Prüfling 50 wirkende Kraft F mittels der Kraftmesseinrichtung 40 kontinuierlich ermittelt, so dass eine Zeitspanne ts zwischen dem Beginn der Beaufschlagung und dem Eintritt eines auf ein Durchbrennen des Prüflings 50 basierenden Kraftabfalls ermittelt wird.

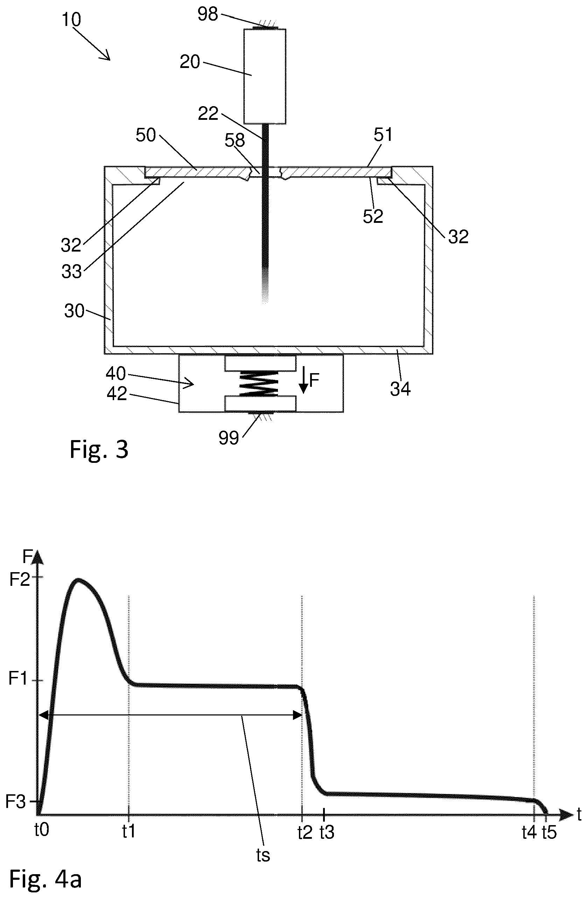

Die Figur 3 zeigt die erfindungsgemäße Prüfvorrichtung 10 gemäß der Figur 1 und 2 nach dem Durchbrennen des Prüflings 50. Das Ergebnis des Durchbrennens des Prüflings 50 ist in der Figur 3 ersichtlich. Dabei hat der Massestrom 22 aufgrund des Wärmeeintrags eine resultierende Öffnung 58 in dem Prüfling 50 ein- bzw. durchgebrannt. Da jetzt der Massestrom 22 durch die durchgebrannte Öffnung 58 des Prüflings 50 hindurch strömen kann, erfolgt kein oder nur ein sehr geringer Krafteintrag in den Prüfling 50, so dass es zu einem Kraftabfall kommt, der mittels der Kraftmesseinrichtung 40 ermittelt wird. Somit kann mittels des beschriebenen erfindungsgemäßen Verfahrens die Zeitspanne ts zwischen dem Beginn der Beaufschlagung und dem Eintritt eines auf das Durchbrennen des Prüflings 50 basierenden Kraftabfalls ermittelt werden. Dies lässt sich am besten in dem Kraft-Zeit-Diagramm der Figur 4a erkennen.

Die Figur 4a zeigt ein schematisiertes Kraft-Zeit-Diagramm mit einem Kraft-Zeit-Verlauf, welches mittels des erfindungsgemäßen Verfahrens ermittelt wurde, beispielsweise durch eine der in den Figuren 1 bis 3 und 5 bis 8 dargestellten erfindungsgemäßen Prüfvorrichtungen. Dabei wurde die in den Prüfling 50 durch den Massestrom 22 eingetragene Kraft F über die Zeit t ermittelt. Ein solcher Kraft-Zeit-Verlauf, kann durch die Kraftmesseinrichtung 40 bestimmt werden.

In einem Startzeitpunkt t0, der den Beginn der Beaufschlagung des Prüflings 50 mit dem Massestrom 22 darstellt, erfolgt ein starker Kraftanstieg bis zu einem Kraftmaximum F2. Anschließend fällt die Kraft auf ein Kraft F1 ab, so dass die durch den Massestrom 22 eingetragenen Kraft relativ konstant ab dem Zeitpunkt t1 bis zu einem Zeitpunkt t2 bleibt. Der Zeitraum zwischen dem Zeitpunkt t0 und t1 zeigt den Startimpuls eines als Raketenmotor ausgebildeten Beaufschlagungsmittels 20. Nach dem erfolgten Startimpuls stellt das als Raketenmotor ausgebildete Beaufschlagungsmittel einen konstant bleibenden Massestrom 22 bereit, der gleichmäßig und kontinuierlich Wärme und Kraft in den Prüfling 50 einträgt, so dass ab dem Zeitpunkt t1 bis zu dem Zeitpunkt t2 eine im Wesentlichen konstante Kraft auf den Prüfling 50 wirkt. Im Zeitpunkt t2 erreicht der Prüfling 50 seine zeitliche Durchbrennbeständigkeit, so dass dieser beginnt im Zeitpunkt t2 durchzubrennen. Da, wie beispielsweise in der Figur 3 dargestellt, eine Öffnung 58 in den Prüfling 50 durch den Massestrom 22 gebrannt wird und dieser somit durch die Öffnung 58 des Prüflings 50 strömen kann und dadurch keine oder nur noch eine sehr geringe Kraft in den Prüfling 50 eingetragen wird, kommt es somit ab dem Eintritt des Durchbrennens, welches dem Zeitpunkt t2 entspricht, zu einem quasi schlagartigen Kraftabfall ausgehend von der Kraft F1 auf eine Kraft F3. Der Kraftabfall auf das Kraftniveau der Kraft F3 ist zu dem Zeitpunkt t3 beendet, in dem das Durchbrennen des Prüflings beendet ist. Mit anderen Worten wird der Zeitpunkt t2 des Durchbrennens durch den Kraftsprung zwischen dem Kraftniveau (Kraftplateau) mit der Kraft F1 und dem Kraftniveau (Kraftplateau) mit der Kraft F3 ermittelt. Somit lässt sich die Zeitspanne ts als Maß der zeitlichen Durchbrennbeständigkeit zwischen dem Beginn der Beaufschlagung t0 und dem Eintritt eines auf ein Durchbrennen des Prüflings 50 basierenden Kraftabfalls zum Zeitpunkt t2 ermitteln. Somit ist mittels des erfindungsmäßen Verfahrens die zeitliche Durchbrennbeständigkeit, also die Zeitspanne ts, bestimmbar. Da der Massestrom 22 auch nach dem Durchbrennen noch eine gewisse Zeit strömt und dabei an dem Rand der Öffnung 58 vorbeiströmt, wird somit eine geringe Kraft F3 auch nach dem Durchbrennen in den Prüfling 50 eingetragen. Es gilt folgende Beziehung: F2 > F1 > F3 > 0. Ab einem Zeitpunkt t4 kommt es zum Kraftabfall von der Kraft F3 hin auf einen Wert 0 im Zeitpunkt t5, da es aufgrund des zur Neige gehenden Treibstoffs (Brennstoff) zum sogenannten Ausbrennen des als Raketenmotor ausgebildeten Beaufschlagungsmittels 20 kommt.

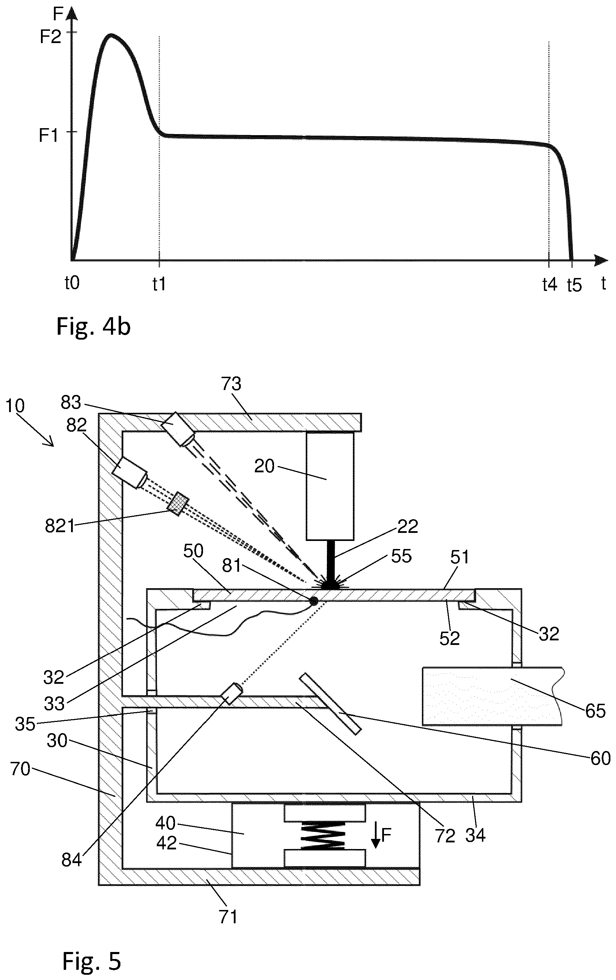

Die Figur 4b zeigt ein schematisiertes Kraft-Zeit-Diagramm mit einem Kraft-Zeit-Verlauf, der durch eine der in den Figuren 1 bis 3 und 5 bis 8 dargestellten erfindungsgemäßen Prüfvorrichtungen ermittelt wurde. Dabei wurde die in den Prüfling 50 durch den Massestrom 22 eingetragene Kraft F über die Zeit t ermittelt, wobei es in diesem Fall nicht zu einem Durchbrennen des Prüflings 50 kam, sondern dieser der Beaufschlagung durch den Massestrom 20 widerstanden hat. Ein solcher Kraft-Zeit-Verlauf, kann durch die Kraftmesseinrichtung 40 bestimmt werden.

In einem Startzeitpunkt t0, der den Beginn der Beaufschlagung des Prüflings 50 mit dem Massestrom 22 darstellt, erfolgt ein starker Kraftanstieg bis zu einem Kraftmaximum F2. Anschließend fällt die Kraft auf ein Kraft F1 ab, so dass die durch den Massestrom 22 eingetragenen Kraft relativ konstant ab dem Zeitpunkt t1 bis zu einem Zeitpunkt t4 bleibt. Der Zeitraum zwischen dem Zeitpunkt t0 und t1 zeigt den Startimpuls eines als Raketenmotor ausgebildeten Beaufschlagungsmittels 20. Nach dem erfolgten Startimpuls stellt das als Raketenmotor ausgebildete Beaufschlagungsmittel einen konstant bleibenden Massestrom 22 bereit, der gleichmäßig und kontinuierlich Wärme und Kraft in den Prüfling 50 einträgt, so dass ab dem Zeitpunkt t1 bis zu dem Zeitpunkt t4 eine im Wesentlichen konstante Kraft auf den Prüfling 50 wirkt. Ab einem Zeitpunkt t4 kommt es zum Kraftabfall von der Kraft F1 hin auf einen Wert 0 im Zeitpunkt t5, da es aufgrund des zur Neige gehenden Treibstoffs zum sogenannten Ausbrennen des als Raketenmotor ausgebildeten Beaufschlagungsmittels 20 kommt. Im Gegensatz zu dem Kraftverlauf der Figur 4a kam es nicht zu einem Durchbrennen des Prüflings 50, so dass kein Kraftabfall von F1 auf eine Kraft F3 > 0 aufgrund des Durchbrennens ersichtlich ist. Der Prüfling 50 hat die gesamte Zeit der Beaufschlagung (t0 bis t5) ohne ein Durchbrennen überstanden. Somit ist die Zeitspanne ts > t5 - t0.

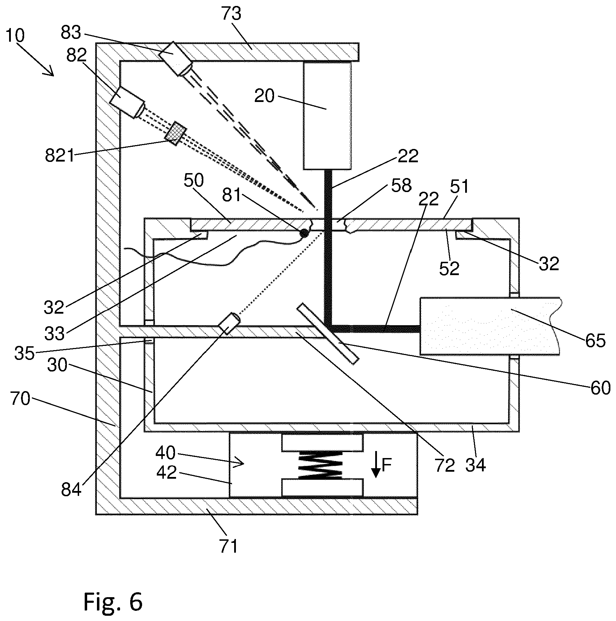

In den Figuren 5 und 6 ist ein zweiten Ausführungsbeispiel einer erfindungsgemäßen Prüfvorrichtung 10 schematisiert dargestellt, wobei die Figur 5 diese während der Beaufschlagung eines Prüflings 50 mit dem thermischen Hochgeschwindigkeits-Massestrom 22 zeigt und Figur 6 diese nach dem Durchbrennen des Prüflings zeigt.

Der Aufbau des zweiten Ausführungsbeispiels basiert auf der Prüfvorrichtung 10 des ersten Ausführungsbeispiels, wobei das Beaufschlagungsmittel 20, die Kraftmesseinrichtung 40 und der Aufnahmeabschnitt 32 der Halterung 30 sowie der gezeigte Prüfling 50 dem der ersten Prüfvorrichtung 10 des ersten Ausführungsbeispiels entsprechen und somit zur Vermeidung von Redundanzen auf eine Wiederholung verzichtet wird. Alle beschriebenen Merkmale bzgl. der genannten gleichartigen Bauteile lassen sich übertragen.

Das Beaufschlagungsmittel 20 stützt sich in diesem Ausführungsbeispiel nicht an einer Einspannung, sondern an einem Lagerbalken 73 einer Konsole 70 ab. Die Konsole 70 kann auch als Gestell oder Trageinheit bezeichnet werden. Die Kraftmesseinrichtung 40 ist ebenfalls an der Konsole 70 gelagert und stützt sich an dieser ab, und zwar an dem Lagerfuß 71 der Konsole 70.

Die Halterung 30 ist schematisiert als topfartiges Bauteil ausgebildet, wobei diese einen Bodenabschnitt 34 aufweist, mit dem die Halterung 30 auf der Kraftmesseinrichtung 40 der Bestimmungseinrichtung steht und somit mit dieser wirkmäßig gekoppelt ist, so dass der Kraftfluss von der Halterung 30 auf die Kraftmesseinrichtung 40 sichergestellt ist. Die Halterung 30 kann sich somit zumindest in einem geringen Umfang gegenüber der Konsole 70 bewegen, so dass die durch den Massestrom 22 in den Prüfling 50 eingetragenen Kraft F ermittelt werden kann. Es kann in einer nicht dargestellten Ausführungsvariante eine Führungseinrichtung zwischen Konsole und Halterung vorgesehen sein, so dass die Halterung in eine Richtung beweglich geführt ist.

Innerhalb der Halterung 30 ist ein Prallblech 60 angeordnet, welches an einem Ende eines Tragarms 72 der Konsole 70 angeordnet ist. Der Tragarm 72 erstreckt sich durch eine lochartige Ausnehmung 35 in einer Seitenwand der Halterung 30, wobei der Tragarm 72 mit Spiel durch die lochartige Ausnehmung 35 hindurch ragt, so dass eine kraftmäßige Entkopplung des Prallblechs 60 gegenüber der Halterung 30 und somit zu der Kraftmesseinrichtung 40 gewährleistet ist. Das Prallblech 60 ist gegenüber der Vorderseite 51 des Prüflings 50 geneigt, also winklig angeordnet, so dass der im Fall des Durchbrennens durch die Öffnung 58 des Prüflings 50 strömende Massestrom 22 in Richtung einer Abzugsanlage gelenkt wird, wie dies in der Figur 6 gut zu erkennen ist. Die Neigung des Prallblechs beträgt bevorzugt zwischen 30° und 60° bezogen auf die Vorderseite 51 des Prüflings 50. Der Ansaugstutzen 65 der Abzugsanlage ist hier schematisiert angedeutet. Dieser Ansaugstutzen 65 ist durch eine weitere Ausnehmung in der anderen Seitenwand der Halterung 30 hindurchgeführt.

An dem Tragarm 72 ist eine Infrarotkamera 84 angeordnet, die auf die Rückseite 52 des Prüflings 50 gerichtet ist und eine Thermografie während der Beaufschlagung des Prüflings 50 mit dem Massestrom 22 von dessen Rückseite 52 aufzeichnet. Die Infrarotkamera 84 ist in ihrer Ausrichtung einstellbar an dem Tragarm 72 befestigt. Die Infrarotkamera 84 bildet einen Teil der Bestimmungseinrichtung.

Weiterhin ist ein Temperaturmesseinrichtung 81 auf der Rückseite 52 des Prüflings 50 in der Nähe des Auftreffabschnitt 55 angeordnet. Die Temperaturmesseinrichtung 81 ist als Thermoelement ausgebildet und auf die Rückseite 52 des Prüflings aufgeklebt.

An der Konsole 70 ist eine erste Hochgeschwindigkeitskamera 82 mit einem optischen Filter 821 und eine zweite Hochgeschwindigkeitskamera 83 angebracht, die jeweils in ihrer Ausrichtung einstellbar sind. Die Hochgeschwindigkeitskameras 82, 83 bilden einen Teil der Bestimmungseinrichtung. Die erste Hochgeschwindigkeitskamera 82 ist auf den Auftreffabschnitt 55 des Massestroms 22 gerichtet. Die zweite Hochgeschwindigkeitskamera 83 ist auf dem Massestrom 22 und dessen Auftreffabschnitt 55 und den Prüfling 50 gerichtet. Diese kann aber auch so ausgerichtet werden, dass zusätzlich das Beaufschlagungsmittel 20 mit aufgezeichnet wird. Die beiden Hochgeschwindigkeitskameras zeichnen eine Filmaufnahme der Beaufschlagung an.

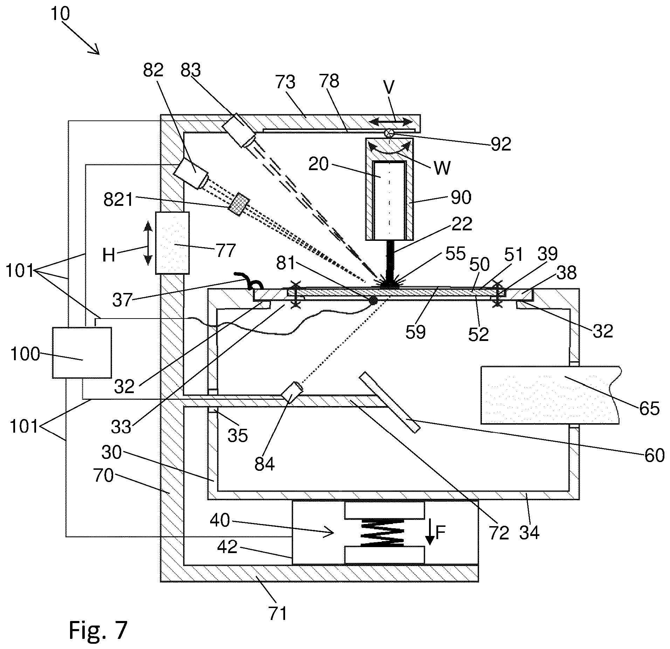

In der Figur 7 ist ein drittes Ausführungsbeispiel einer erfindungsgemäßen Prüfvorrichtung 10 schematisiert dargestellt, wobei diese während der Beaufschlagung eines Prüflings 50 mit dem thermischen Hochgeschwindigkeits-Massestrom 22 zeigt.

Der Aufbau des dritten Ausführungsbeispiels basiert auf der Prüfvorrichtung 10 des zweiten Ausführungsbeispiels, wobei das Beaufschlagungsmittel 20, die Kraftmesseinrichtung 40 und der Aufnahmeabschnitt 32 der Halterung 30, dem des zweiten Ausführungsbeispiels entsprechen und somit zur Vermeidung von Redundanzen auf eine Wiederholung verzichtet wird. Alle beschriebenen Merkmale bzgl. der genannten gleichartigen Bauteile lassen sich übertragen.

Der Aufbau der Konsole 70 und dessen Funktionen ist ähnlich der Konsole 70 des zweiten Ausführungsbeispiels in den Figuren 5 und 6, wobei der Lagerbalken 73, der das Beaufschlagungsmittel 20 trägt, in einer Höhenrichtung H mittels einer ersten Verstelleinrichtung 77 verstellbar ist. Somit ist ein Abstand des Beaufschlagungsmittels 20 gegenüber dem Aufnahmeabschnitt 32 und somit gegenüber dem Prüfling 50 einstellbar.

Das Beaufschlagungsmittel 20 ist in einer Sacklochöffnung eines Trägerelements 90 aufgenommen. Das Trägerelement 90 ist als ein einseitig verschlossenes Rohr ausgebildet. Das Trägerelement 90 weist eine nicht dargestellte Arretiereinrichtung auf, die das Beaufschlagungsmittel 20 gegenüber dem Trägerelement 90 festlegt, so dass das Beaufschlagungsmittel 20 gegen ein herausfallen aus dem Trägerelement 90 gesichert ist.

Das Trägerelement 90 ist schwenkbar in einer Schwenkrichtung W mittels eines arretierbaren Gelenks 92 an dem Lagerbalken 73 der Konsole 70 gehalten, so dass der Winkel des Beaufschlagungsmittels 20 bezogen auf den Aufnahmeabschnitt 32 und somit dem Prüfling 50 einstellbar ist, so dass es dadurch ermöglicht ist, dass der Massestrom 22 auch in einem Winkel auf die Vorderseite 51 des Prüflings 50 auftreffen kann. Bevorzugt ist der einstellbare Winkel zwischen 0° und 60°, besonders bevorzugt zwischen 0° und 45°. Dabei entspricht ein Winkel von 0° einem orthogonal auf den Aufnahmeabschnitt 32 bzw. den Prüfling 50 gerichteten Massestrom 22, wie dies in der Figur 7 dargestellt ist.

Das Trägerelement 90 ist translatorisch in einer vertikalen Richtung V mittels eines zweiten Verstelleinrichtung 78 verlagerbar an dem Lagerbalken 73 der Konsole 70 gehalten, so dass das Trägerelement 90 parallel zu dem Aufnahmeabschnitt 32 bzw. dem Prüfling 50 verstellbar ist, so dass je nach eingestelltem Winkel des Trägerelements 90 und dem darin aufgenommenen Beaufschlagungsmittel 20 derart eingestellt werden kann, dass der Massestrom 22 auf den Aufnahmeabschnitt 32 bzw. den Prüfling 50 gerichtet ist, bevorzugt so, dass der Massestrom 22 mittig auf den Prüfling 50 trifft.

Die erste Verstelleinrichtung 77 kann als manuelle, elektromotorische, pneumatische oder hydraulische Verstelleinrichtung ausgebildet sein. Die zweite Verstelleinrichtung 78 kann ebenfalls als manuelle, elektromotorische, pneumatische oder hydraulische Verstelleinrichtung ausgebildet sein.

An der Konsole 70 ist eine erste Hochgeschwindigkeitskamera 82 mit einem optischen Filter 821 und eine zweite Hochgeschwindigkeitskamera 83 angebracht, die jeweils in ihrer Ausrichtung einstellbar sind. Die erste Hochgeschwindigkeitskamera 82 ist auf den Auftreffabschnitt 55 des Massestroms 22 gerichtet. Die zweite Hochgeschwindigkeitskamera 83 ist auf dem Massestrom 22 und dessen Auftreffabschnitt 55 und den Prüfling gerichtet. Diese kann aber auch so ausgerichtet werden, dass zusätzlich das Beaufschlagungsmittel 20 mit aufgezeichnet wird. Die beiden Hochgeschwindigkeitskameras zeichnen eine Filmaufnahme der Beaufschlagung auf und bilden einen Teil der Bestimmungseinrichtung zur Prüfung des Prüflings.

An dem Tragarm 72 der Konsole 70 ist eine Infrarotkamera 84 angeordnet, die wie in dem zweiten Ausführungsbeispiel aufgebaut und ausgerichtet ist.

Innerhalb der Halterung 30 ist ein Prallblech 60 angeordnet, welches an einem Ende des Tragarms 72 der Konsole 70 verstellbar in Position und Winkellage ist. Der Tragarm 72 erstreckt sich durch eine lochartige Ausnehmung in einer Seitenwand der Halterung 30, so dass diese kraftmäßig gegenüber der Halterung 30 entkoppelt ist. Das Prallblech 60 ist gegenüber der Vorderseite 51 des Prüflings 50 so geneigt, so dass der im Fall des Durchbrennens durch eine Öffnung des Prüflings 50 strömende Massestrom 22 in Richtung einer Abzugsanlage gelenkt wird. Die Neigung des Prallblechs kann bevorzugt zwischen 30° und 60° bezogen auf die Vorderseite 51 des Prüflings 50 einstellbar. Der Ansaugstutzen 65 der Abzugsanlage ist hier schematisiert angedeutet. Dieser Ansaugstutzen 65 ist durch eine weitere Ausnehmung in der anderen Seitenwand der Halterung 30 hindurchgeführt.

Weiterhin ist ein Temperaturmesseinrichtung 81 auf der Rückseite 52 des Prüflings 50 in der Nähe des Auftreffabschnitt 55 angeordnet. Die Temperaturmesseinrichtung 81 ist als Thermoelement ausgebildet und auf die Rückseite 52 des Prüflings aufgeklebt.

Im Gegensatz zu den ersten beiden Ausführungsbeispielen ist der Prüfling 50 nicht direkt in dem Aufnahmeabschnitt 32 der Halterung 30 aufgenommen, sondern indirekt. Es ist dazu ein Prüflingshalter 38 vorgesehen, in dem der Prüfling 50 aufgenommen ist, wobei der Prüflingshalter 38 in dem Aufnahmeabschnitt 32 aufgenommen ist. Der Prüflingshalter 38 weist bevorzugt ein Maschengitter 59 auf, welches über den Prüfling 50 planenartig gelegt ist. Somit ist der Prüfling 50 sicher auf dem Prüflingshalter 38 gehalten. Der Prüflingshalter 38 ist rahmenartig ausgebildet, so dass der Prüfling 50 darin einsetzbar ist.

Eine erste Fixiervorrichtung 37 ist zur Fixierung des Prüflingshalters 38 in dem Aufnahmeabschnitt 32 vorgesehen und hier als Klemmhebel ausgebildet. Diese Fixiereinrichtung 37 ist zwischen einer Fixierstellung und einer Freigabestellung umschaltbar, so dass in der Fixierstellung der der Prüflingshalter 38 gegenüber dem Aufnahmeabschnitt 32 festgesetzt ist und in der Freigabestellung der Prüflingshalter 38 in den Aufnahmeabschnitt 32 aufnehmbar bzw. entnehmbar ist.

Weiterhin ist eine zweite Fixiervorrichtung 39 zur Fixierung des Prüflings 50 an dem Prüflingshalter 38 vorgesehen, die als Schraubenelemente ausgebildet sind und schematisiert angedeutet sind.

Weiterhin weist die Prüfvorrichtung 10 eine Datenerfassungseinrichtung 100 auf, die als Computer ausgebildet ist und auch als Messrechner bezeichnet werden kann. Die Datenerfassungseinrichtung 100 sämtlichen zuvor genannten Messeinrichtungen elektrisch verbunden und derart eingerichtet, die Messsignale der Messeinrichtung aufzuzeichnen. Mit anderen Worten ist die Datenerfassungseinrichtung 100 mit der Kraftmesseinrichtung 40, der Temperaturmesseinheit 81, der erste Hochgeschwindigkeitskamera 82, zweite Hochgeschwindigkeitskamera 83 und der Infrarotkamera 84 über eine Datenleitung 101 verbunden. Diese kann als Datenbus ausgebildet sein.

In einer nicht dargestellten Ausführungsvariante ist ebenfalls denkbar und möglich, dass die erste und zweite Verstelleinrichtung 77, 78 jeweils einen Positionssensor aufweisen und/oder im Falle einer nicht manuellen Ausführung durch die Datenerfassungseinrichtung angesteuert werden.

Weiterhin kann es vorgesehen sein, dass die Datenerfassungseinrichtung 100 zur elektrischen Zündung des Beaufschlagungsmittels 20 dient und somit die Aufzeichnung der Messergebnisse gestartet wird.

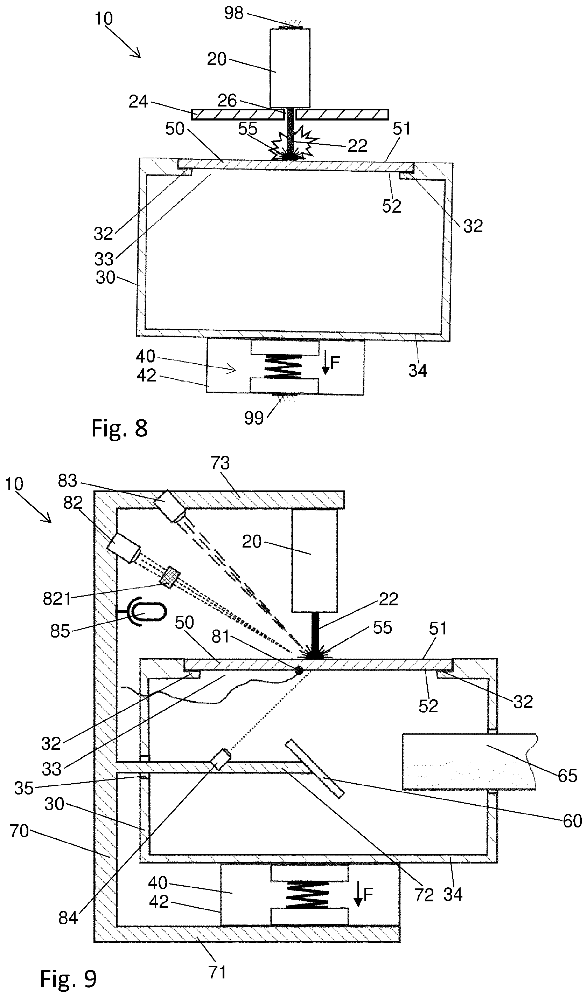

In der Figur 8 ist ein viertes Ausführungsbeispiel einer erfindungsgemäßen Prüfvorrichtung 10 während der Beaufschlagung eines Prüflings 50 mit dem thermischen Hochgeschwindigkeits-Massestrom 22 gezeigt.

Dieses vierte Ausführungsbeispiel entspricht weitestgehend dem ersten Ausführungsbeispiel, das in den Figuren 1 bis 3 dargestellt ist, jedoch wurde dieses mit einem als Lochblende ausgebildeten Abschirmmittel 24 ergänzt, welches zwischen dem Beaufschlagungsmittel 20 und dem Aufnahmeabschnitt 32 angeordnet ist. Weiters ist im Unterschied zu dem ersten Ausführungsbeispiel trifft der Massestrom 22 nicht genau senkrecht auf den Prüfling 50, da die Halterung 30 leicht geneigt ist. Somit trifft die Reflektion des Massestroms 22 mehrheitlich auf das Abschirmmittel 24 und das Beaufschlagungsmittel 20 ist ausreichend gut gegen eine Beschädigung geschützt. Das als Lochblende 24 ausgebildete Abschirmmittel 24 ist aus einem hochtemperaturbeständigen und thermoschockbeständigen Material ausgebildet. Das Abschirmmittel 24 weist ein Loch 26 auf, durch das der Massestrom 22 hindurchströmen kann. Das als Lochblende ausgebildete Abschirmmittel 24 ist direkt an das Beaufschlagungsmittel 20 montiert, so dass das Loch 26 korrespondierend zu der Düse des Beaufschlagungsmittels 20 ausgebildet ist. In einer nicht dargestellten alternativen Ausführungsform kann das Abschirmmittel mit einem Abstand zu dem Beaufschlagungsmittel angeordnet sein. Dabei ist das Loch derart bemessen, dass der Massestrom ungehindert strömen kann. Alle weiteren Aspekte der Prüfvorrichtung 10 des vierten Ausführungsbeispiels entsprechend dem des ersten Ausführungsbeispiels und werden an dieser Stelle zur Vermeidung von Redundanzen nicht noch einmal wiederholt.

Figur 9 zeigt eine schematisierte Darstellung eines fünften Ausführungsbeispiels einer erfindungsgemäßen Prüfvorrichtung während der Beaufschlagung eines Prüflings mit dem thermischen Hochgeschwindigkeits-Massestrom.

Der Aufbau des fünften Ausführungsbeispiels basiert auf der Prüfvorrichtung 10 des zweiten Ausführungsbeispiels, wobei der einzige Unterschied darin besteht, dass das fünfte Ausführungsbeispiel der Figur 9 eine akustische Messeinrichtung 85 umfasst, die als Mikrophon ausgebildet ist. Mittels der akustischen Messeinrichtung 85 ist eine Aufzeichnung während der Beaufschlagung des Prüflings 50 mit dem Massestrom 22 möglich, so dass ergänzende Information über den Verlauf der Beaufschlagung ermittelt werden. Beispielsweise lässt sich durch die akustische Messeinrichtung 85 der Zeitpunkt t0 des Zündens des Beaufschlagungsmittels 20 genau bestimmen. Weiterhin lässt sich ebenfalls der Zeitpunkt des Durchbrennens des Prüflings 50 durch die akustische Messeinrichtung bestimmen. Die akustische Messeinrichtung ist somit ein Teil der Bestimmungseinrichtung. Somit wird eine Redundanz zu den anderen Messeinrichtungen wie die Kraftmesseinrichtung und den Kameras bereitgestellt, welches auch auf einem anderen Messprinzip beruht. Weiterhin bietet die akustische Messeinrichtung den Vorteil, dass anders als bei den Kameras diese nicht durch eine Rauchentwicklung während der Beaufschlagung in ihren Messeigenschaften beeinträchtigt ist. Die akustische Messeinrichtung könnte auch ohne die anderen Messeinrichtungen die Bestimmungseinrichtung bildet. Mit anderen Worten kann alleinig durch die akustische Messeinrichtung die zeitliche Durchbrennbeständigkeit des Prüflings ermittelt werden.

Alle anderen beschriebenen Merkmale des zweiten Ausführungsbeispiels der Figur 5 lassen sich ohne Einschränkungen auf das fünfte Ausführungsbeispiel der Figur 9 übertragen.

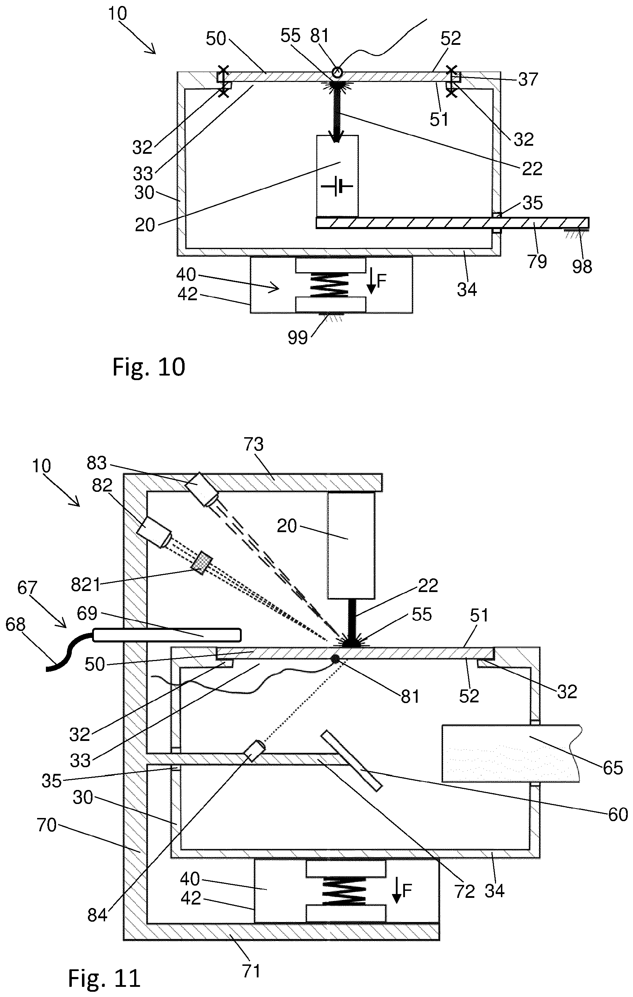

Figur 10 zeigt eine schematisierte Darstellung eines sechsten Ausführungsbeispiels einer erfindungsgemäßen Prüfvorrichtung 10 während der Beaufschlagung eines Prüflings 50 mit dem thermischen Hochgeschwindigkeits-Massestrom 22.

Die Prüfvorrichtung 10 weist eine einen Aufnahmeabschnitt 32 aufweisende Halterung 30 auf, in dem der Prüfling 50 direkt aufgenommen ist. Der Aufnahmeabschnitt 32 ist dazu als eine Ausnehmung 33 begrenzender Randabschnitt der Halterung 30 ausgebildet, wobei der Randabschnitt gestuft ausgebildet ist, so dass der Prüfling 50 dort sicher eingesetzt werden kann. Das Beaufschlagungsmittel 20, welches hier als galvanisches Element ausgebildet ist und zwar als ein Lithium-Ionen-Akkumulator, ist an einer festen unverschieblichen ersten Lagerung 98 gehalten, die hier schematisiert als ein an einer Einspannung festgelegten Halteträger 79 dargestellt ist. Der Halteträger 79 erstreckt sich durch eine lochartige Ausnehmung 35 in einer Seitenwand der Halterung 30, wobei der Halteträger 79 mit Spiel durch die lochartige Ausnehmung 35 hindurch ragt, so dass eine kraftmäßige Entkopplung des Beaufschlagungsmittel 20 gegenüber der Halterung 30 und somit zu der Kraftmesseinrichtung 40 gewährleistet ist.

Der Massestrom 22 wird durch das Beaufschlagungsmittel 20 bereitgestellt. Das Beaufschlagungsmittel 20 ist auf den Prüfling 50 gerichtet, so dass der Massestrom 22 in einem Auftreffabschnitt 55 der Vorderseite 51 auf den Prüfling 50 trifft und eine Wärme und eine Kraft F in diesen einträgt. Der Auftreffabschnitt 55 kann auch als Auftreffpunkt bezeichnet werden. Das Beaufschlagungsmittel 20 stößt den Massestrom 22 aus und drückt mit diesem auf den Prüfling 50. Dieser leitet die Kraft F über die als Schraube ausgebildete Fixiereinrichtung 37 und den Aufnahmeabschnitt 32 in die Halterung 30 ein, die mit der Kraftmesseinrichtung 40 über den Bodenabschnitt 34 gekoppelt ist, so dass die in den Prüfling 50 durch den Massestrom 22 eingetragene Kraft F durch die Kraftmesseinrichtung bestimmt wird.

Dabei kann durch ein erfindungsgemäßes Verfahren die zeitlichen Durchbrennbeständigkeit des Prüflings 50 bestimmt werden. Wie in der Figur 10 ersichtlich, wird der Prüfling 50 mit dem thermischen Hochgeschwindigkeits-Massestrom 22 aus dem galvanischen Element 20 beaufschlagt und es wird die durch die Beaufschlagung auf den Prüfling 50 wirkende Kraft F mittels der Kraftmesseinrichtung 40 kontinuierlich ermittelt, so dass eine Zeitspanne ts zwischen dem Beginn der Beaufschlagung und dem Eintritt eines auf ein Durchbrennen des Prüflings 50 basierenden Kraftabfalls ermittelt wird. Zusätzlich oder alternativ kann die Bestimmungseinrichtung auch andere oder weitere Messeinrichtungen umfassen.

Das als galvanische Element ausgebildete Beaufschlagungsmittel 20 ist innerhalb der Halterung 30 angeordnet und zwar derart, dass der Massestrom 22 entgegen der Schwerkraft aus dem galvanischen Element austritt, sprich nach oben herausströmt. Dies bietet den Vorteil, dass bei einer solchen stehenden Anordnung im Gegensatz zu einer hängenden Anordnung kein oder kaum brennbares, flüssiges Elektrolyt aus dem galvanischen Element 20 ausdringen (auslaufen) kann und somit eine unkontrollierten Verbrennung oder sogar einer Verpuffung entgegengewirkt ist.

Die Prüfvorrichtung 10 weist die mit der Halterung 30 wirkmäßig gekoppelten Kraftmesseinrichtung 40 auf. Diese Kraftmesseinrichtung 40 ist in einem gekapselten Gehäuse 42 aufgenommen. Die Kraftmesseinrichtung 40 ist an einer unverschieblichen zweiten Lagerung 99 gehalten, so dass diese die durch den Massestrom in den Prüfling 50 eingetragene Kraft F ermittelt werden kann.

Weiterhin ist ein Temperaturmesseinrichtung 81 auf der Rückseite 52 des Prüflings 50 in der Nähe des Auftreffabschnitt 55 angeordnet, so dass die Temperatur des Prüflings 50 während der Beaufschlagung ermittelbar ist. Die Temperaturmesseinrichtung 81 ist dabei als Thermoelement ausgebildet.

Figur 11 zeigt eine schematisierte Darstellung eines siebten Ausführungsbeispiels einer erfindungsgemäßen Prüfvorrichtung während der Beaufschlagung eines Prüflings mit dem thermischen Hochgeschwindigkeits-Massestrom.

Der Aufbau des siebten Ausführungsbeispiels basiert auf der Prüfvorrichtung 10 des zweiten Ausführungsbeispiels, wobei der einzige Unterschied darin besteht, dass das siebte Ausführungsbeispiel der Figur 11 eine Gebläseeinrichtung 67 umfasst. Die Gebläseeinrichtung weist eine Druckluftlanze 69 auf, die in der Konsole 70 fixiert ist und die mit einem Druckluftschlauch 68 verbunden ist, der an einem nicht gezeigten Verdichter angeschlossen ist. Die Gebläseeinrichtung 67 ist dabei so eingerichtet und angeordnet, dass diese den während der Beaufschlagung entstehenden Rauch mittels eines Luftstroms wegbewegt. Dies bietet den Vorteil, dass bei einem Einsatz einer Hochgeschwindigkeitskamera die Sicht auf den Prüfling während der Beaufschlagung freigehalten wird und diese nicht durch Rauch beeinträchtigt ist. Somit kann die Genauigkeit der Prüfung des Prüflings und insbesondere der Bestimmung der zeitlichen Durchbrennbeständigkeit mittels der Hochgeschwindigkeitskamera weiter verbessert werden. Dabei ist der Fluidstrom so zu bemessen, dass dieser den Massestrom während der Beaufschlagung nur unwesentlich und technisch vernachlässigbar beeinflusst.

Alle anderen beschriebenen Merkmale des zweiten Ausführungsbeispiels der Figur 5 lassen sich ohne Einschränkungen auf das siebte Ausführungsbeispiel der Figur 11 übertragen.

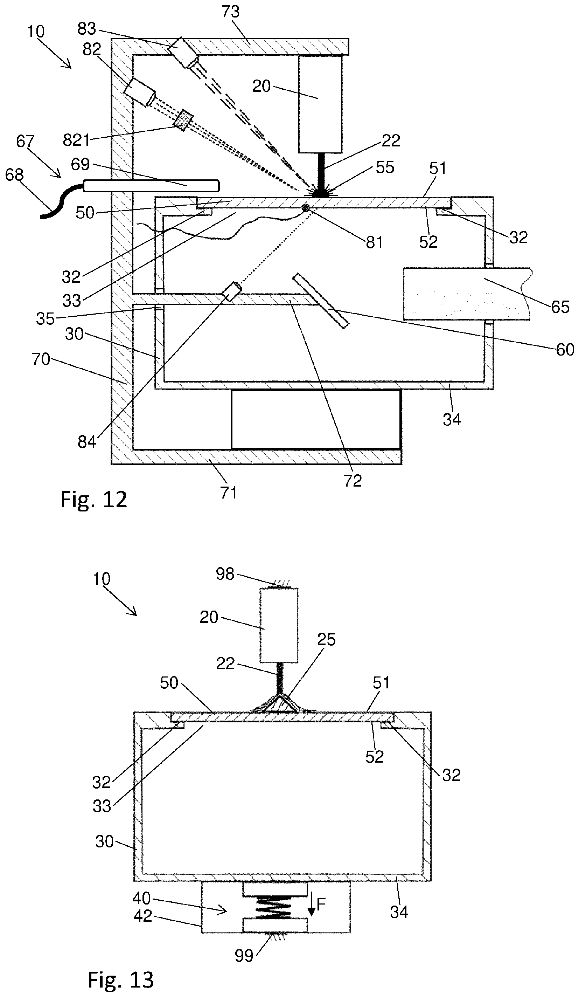

Figur 12 zeigt eine schematisierte Darstellung eines nicht erfindungsgemäßen Vergleichsbeispiels einer Prüfvorrichtung während der Beaufschlagung eines Prüflings mit dem thermischen Hochgeschwindigkeits-Massestrom.

Der Aufbau dieses Vergleichsbeispiels basiert auf der Prüfvorrichtung 10 des siebten Ausführungsbeispiels, wobei der einzige Unterschied darin besteht, dass das Vergleichsbeispiel der Figur 12 keine Kraftmesseinrichtung umfasst. Die Bestimmungseinrichtung zur Bestimmung der zeitlichen Durchbrennbeständigkeit umfasst hier die Hochgeschwindigkeitskameras 82 und 83, wobei diese die Zeitspanne ts ermitteln.

Figur 13 zeigt eine schematisierte Darstellung eines achten Ausführungsbeispiels einer erfindungsgemäßen Prüfvorrichtung während der Beaufschlagung eines Prüflings mit dem thermischen Hochgeschwindigkeits-Massestrom.

Der Aufbau des achten Ausführungsbeispiels basiert auf der Prüfvorrichtung 10 des ersten Ausführungsbeispiels, wobei der einzige Unterschied darin besteht, dass das achte Ausführungsbeispiel der Figur 13 eine Lenkeinrichtung 25 umfasst.

Durch die als Keil ausgebildete Lenkeinrichtung 25 lässt sich der Massestrom 22 in seiner Ausbreitung entsprechend lenken, wie dies deutlich in der Figur 13 zu sehen ist. Die als Keil ausgebildete Lenkeinrichtung 25 ist zwischen dem Beaufschlagungsmittel 20 und dem Prüfling 50 angeordnet, und zwar auf der dem Beaufschlagungsmittel 20 zugewandten Seite 51 des Prüflings 50. Die Lenkeinrichtung 25 ist auf dem Prüfling mittels nicht dargestellter Schrauben fixiert. Die Lenkeinrichtung 25 ist aus Stahl gebildet. Die als Keil ausgebildete Lenkeinrichtung 25 weist zwei den Massestrom leitende Oberflächen auf, wobei der Winkel der einen Oberfläche zu der Prüflingsoberfläche gleich zu dem Winkel der zweiten Oberfläche zu der Prüflingsoberfläche ist. Dadurch lassen sich die in der Realität vorherrschenden Bedingungen noch genauer auf der Prüfvorrichtung nachbilden. Beim Auftreffen des Massestroms 22 auf die Lenkeinrichtung 25 wird dieser Massestrom im Wesentlichen halbiert und entsprechend seitlich abgeleitet. Die Lenkeinrichtung wirkt quasi wie ein Pflug. Die Lenkeinrichtung 25 lässt sich ohne Aufwand in die anderen Ausführungsbeispiele integrieren.

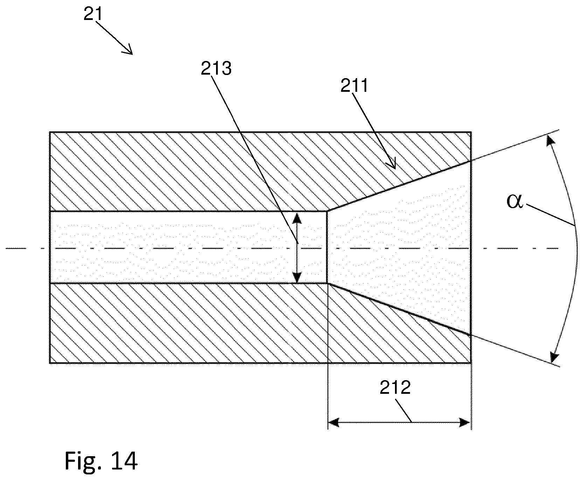

In der Figur 14 ist eine Düse 21 in einem Längsschnitt schematisiert dargestellt. Diese Düse 21 kann in sämtliche zuvor dargestellten Ausführungsvarianten integriert werden, um die Emissionscharakteristik des Massestroms entsprechend einzustellen. Die Düse 21 weist einen konusförmigen bzw. kegelförmigen Düsenaustrittskanal 211 auf, der eine vorbestimmte Länge 212 und einen vorbestimmten Öffnungsquerschnitts 213 und einen vorbestimmten Öffnungswinkel α aufweist. Der Öffnungsquerschnitt 213 stellt hier den Eintrittsquerschnitt von der Zuleitung in den Düsenaustrittskanal dar. Aufgrund des Konuswinkels lässt sich der finale Austrittquerschnitt ohne weiteres rechnerisch ermitteln. Es kann vorgesehen sein, dass die Wandung des Austrittskanals gewölbt, beispielsweise konvex oder konkav, ausgebildet ist.

Grundsätzlich lassen sich auch die in den anderen Ausführungsvarianten dargestellten Messeinrichtungen, Kameras und alle weiteren vorteilhaften Weiterbildungen auf die Prüfvorrichtung der Figur 10 übertragen.

### Bezugszeichen

- 10: Prüfvorrichtung
- 20: Beaufschlagungsmittel
- 21: Düse
- 22: Massestrom
- 24: Abschirmmittel
- 25: Lenkeinrichtung
- 26: Loch
- 30: Halterung
- 32: Aufnahmeabschnitt
- 33: Ausnehmung
- 34: Bodenabschnitt
- 35: lochartige Ausnehmung
- 37: erste Fixiereinrichtung
- 38: Prüflingshalter
- 39: zweite Fixiereinrichtung
- 40: Kraftmesseinrichtung
- 42: gekapseltes Gehäuse
- 50: Prüfling
- 51: Vorderseite
- 52: Rückseite
- 55: Auftreffabschnitt
- 58: Öffnung
- 59: Maschengitter
- 60: Prallblech
- 65: Ansaugstutzen der Abzugseinrichtung
- 67: Gebläseeinrichtung
- 68: Druckluftschlauch
- 69: Druckluftlanze
- 70: Konsole
- 71: Lagerfuß
- 72: Tragarm
- 73: Lagerbalken
- 77: erste Verstelleinrichtung
- 78: zweite Verstelleinrichtung
- 79: Halteträger
- 81: Temperaturmesseinheit
- 82: erste Hochgeschwindigkeitskamera
- 821: optischer Filter
- 83: zweite Hochgeschwindigkeitskamera
- 84: Infrarotkamera
- 85: akustische Messeinrichtung
- 90: Trägerelement
- 92: Gelenk
- 98: erste Lagerung
- 99: zweite Lagerung
- 100: Datenerfassungseinrichtung
- 101: Datenleitung
- 211: Düsenaustrittskanal
- 212: Länge
- 213: Öffnungsquerschnitts
- α: Öffnungswinkel
- t0: Startzeitpunkt
- ts: Zeitspanne als Maß der zeitlichen Durchbrennbeständigkeit

## Patentansprüche

1. Verfahren zur thermomechanischen Prüfung eines Prüflings (50), indem der Prüfling (50) mit einem thermischen Hochgeschwindigkeits-Massestrom (22) beaufschlagt wird, **dadurch gekennzeichnet, dass** eine durch die Beaufschlagung auf den Prüfling (50) wirkende Kraft (F) mittels einer Bestimmungseinrichtung kontinuierlich ermittelt wird und daraus ein Kraft-Zeit-Verlauf bestimmt wird.

2. Verfahren nach Anspruch 1, **dadurch gekennzeichnet, dass** eine Zeitspanne (ts) zwischen dem Beginn der Beaufschlagung und dem Eintritt eines auf ein Durchbrennen des Prüflings (50) basierenden Kraftabfalls ermittelt wird.

3. Verfahren nach einem der vorhergehenden Ansprüche, **dadurch gekennzeichnet, dass** der Zeitpunkt des Beginns der Beaufschlagung (t0) durch einen Kraftanstieg ermittelt wird.

4. Verfahren nach einem der vorhergehenden Ansprüche, **dadurch gekennzeichnet, dass** eine Temperatur des Prüflings (50) ermittelt wird, wobei bevorzugt die Temperatur auf der dem Massestrom (22) abgewandten Seite (52) des Prüflings (50) ermittelt wird.

5. Verfahren nach Anspruch 4, **dadurch gekennzeichnet, dass** die Ermittlung der Kraft und/oder der Temperatur in einer gemeinsamen Datenerfassungseinrichtung (100) erfolgt.

6. Verfahren nach einem der vorhergehenden Ansprüche, **dadurch gekennzeichnet, dass** ein auf den Prüfling (50) wirkender Impuls mittels der über die Zeitspanne (ts) wirkende Kraft (F) bestimmt wird.

7. Verfahren nach einem der vorhergehenden Ansprüche, **dadurch gekennzeichnet, dass** eine Thermofotografie und/oder eine Thermografie des Prüflings (50) aufgezeichnet wird und/oder während der Beaufschlagung ein akustisches Signal ermittelt wird und/oder die Strahlgeschwindigkeit des Massestroms (22) ermittelt wird.

8. Verfahren nach einem der vorhergehenden Ansprüche, **dadurch gekennzeichnet, dass** der Massestrom (22) durch eine Raketentreibladung, einem Acetylenbrenner mit Masseeinspeisung, Flammspritzen oder Plasmaspritzen bereitgestellt wird.

9. Prüfvorrichtung (10) zur thermomechanischen Prüfung eines Prüflings (50), umfassend eine einen Aufnahmeabschnitt (32) aufweisende Halterung (30), in dem der Prüfling (50) direkt oder indirekt aufnehmbar ist, und ein Beaufschlagungsmittel (20) zur Bereitstellung eines thermisches Hochgeschwindigkeits-Massestroms (22) der auf den Prüfling (50) richtbar ist, **dadurch gekennzeichnet, dass** die Prüfvorrichtung (10) eine Bestimmungseinrichtung aufweist, die eine mit der Halterung (30) wirkmäßig gekoppelten Kraftmesseinrichtung (40) umfasst, die derart eingerichtet ist, die durch den Massestrom (22) in den Prüfling (50) eingetragene Kraft (F) zu ermitteln zur Bestimmung eines Kraft-Zeit-Verlaufs.

10. Prüfvorrichtung (10) nach Anspruch 9, **dadurch gekennzeichnet, dass** die Bestimmungseinrichtung zur Bestimmung einer Durchbrennbeständigkeit des Prüflings (50) ausgebildet ist, insbesondere der zeitlichen Durchbrennbeständigkeit des Prüflings (50).

11. Prüfvorrichtung (10) nach Anspruch 9 oder 10, **dadurch gekennzeichnet, dass** die Bestimmungseinrichtung ein Temperaturmesseinrichtung (81) zur Bestimmung der Temperatur des Prüflings (50) aufweist und/oder eine Hochgeschwindigkeitskamera (82, 83) und/oder eine Infrarotkamera (84) und/oder eine akustische Messeinrichtung (85) umfasst.

12. Prüfvorrichtung (10) nach einem der Ansprüche 9 bis 11, **dadurch gekennzeichnet, dass** das Beaufschlagungsmittel (20) gegenüber der Halterung (30) verstellbar ist, wobei bevorzugt ein Winkel und/oder ein Abstand des Beaufschlagungsmittels (20) gegenüber der Halterung (30) einstellbar ist.

13. Prüfvorrichtung (10) nach einem der Ansprüche 9 bis 12, **dadurch gekennzeichnet, dass** das Beaufschlagungsmittel (20) als eine Raketentreibladung, ein Acetylenbrenner mit Masseeinspeisung, eine Flammspritzeinrichtung, ein galvanisches Element oder eine Plasmaspritzeinrichtung ausgebildet ist.

14. Prüfvorrichtung (10) nach einem der Ansprüche 9 bis 13, **dadurch gekennzeichnet, dass** zwischen dem Beaufschlagungsmittel (20) und dem Aufnahmeabschnitt (32) ein Abschirmmittel (24) und/oder eine Lenkeinrichtung (25) angeordnet ist.

15. Prüfvorrichtung (10) zur Durchführung eines Verfahrens zur Prüfung eines Prüflings (50) nach einem der Ansprüche 1 bis 8, **dadurch gekennzeichnet, dass** die Prüfvorrichtung (10) nach einem der Ansprüche 9 bis 14 ausgebildet ist.

## Claims

1. A method for the thermomechanical testing of a test specimen (50) by subjecting the test specimen (50) to a thermal high-speed mass flow (22), **characterized in that** a force (F) acting on the test specimen (50) as a result of said subjection is continuously determined by means of a determining device, and a force-time curve is determined therefrom.

2. The method according to claim 1, **characterized in that** a time span (ts) is determined between the start of subjection and the beginning of a drop in force based on a burn-through of the test specimen (50).

3. The method according to one of the preceding claims, **characterized in that** the instant of the start of subjection (t0) is determined by an increase in force.

4. The method according to one of the preceding claims, **characterized in that** a temperature of the test specimen (50) is determined, wherein the temperature is preferably determined on the side (52) of the test specimen (50) that faces away from the mass flow (22).

5. The method according to claim 4, **characterized in that** the determination of the force and/or of the temperature takes place in a shared data-capture device (100).

6. The method according to one of the preceding claims, **characterized in that** an impulse acting on the test specimen (50) is determined by means of the force (F) acting over the time span (ts).

7. The method according to one of the preceding claims, **characterized in that** a thermal image and/or a thermogram of the test specimen (50) is recorded and/or an acoustic signal is determined during subjection and/or the jet velocity of the mass flow (22) is determined.

8. The method according to one of the preceding claims, **characterized in that** the mass flow (22) is provided by a rocket propelling charge, an acetylene burner with a mass feed, flame spraying or plasma spraying.

9. A testing device (10) for the thermomechanical testing of a test specimen (50), including a holder (30) having a receiving portion (32) in which the test specimen (50) can be received directly or indirectly, and a subjecting means (20) for providing a thermal high-speed mass flow (22) that can be directed at the test specimen (50), **characterized in that** the testing device (10) includes a determining device comprising a force-measuring device (40) which is operatively coupled to the holder (30) and which is configured to determine the force (F) transmitted to the test specimen (50) by the mass flow (22) in order to determine a force-time curve.

10. The testing device (10) according to claim 9, **characterized in that** the determining device is designed to determine a burn-through resistance of the test specimen (50), in particular the burn-through resistance of the test specimen (50) over time.

11. The testing device (10) according to claim 9 or 10, **characterized in that** the determining device includes a temperature-measuring device (81) for determining the temperature of the test specimen (50) and/or comprises a high-speed camera (82, 83) and/or an infrared camera (84) and/or an acoustic measuring device (85).

12. The testing device (10) according to one of claims 9 to 11, **characterized in that** the subjecting means (20) is adjustable relative to the holder (30), wherein it is preferably possible to set an angle and/or a distance of the subjecting means (20) relative to the holder (30).

13. The testing device (10) according to one of claims 9 to 12, **characterized in that** the subjecting means (20) is designed as a rocket propelling charge, an acetylene burner with a mass feed, a flame-spraying device, a galvanic element or a plasma-spraying device.

14. The testing device (10) according to one of claims 9 to 13, **characterized in that** a shielding means (24) and/or a steering device (25) is arranged between the subjecting means (20) and the receiving section (32).

15. A testing device (10) for carrying out a method for testing a test specimen (50) according to one of claims 1 to 8, **characterized in that** the testing device (10) is designed according to one of claims 9 to 14.

## Revendications

1. Procédé d'essai thermomécanique d'une éprouvette (50) en soumettant l'éprouvette (50) à un flux massique thermique à grande vitesse (22), **caractérisé par le fait qu'**une force (F) agissant sur l'éprouvette (50) suite à l'application est déterminée en continu au moyen d'un dispositif de détermination, et une courbe force-temps en est déterminée.

2. Procédé selon la revendication 1, **caractérisé par le fait qu'**un intervalle de temps (ts) est déterminé entre le début de l'application et le début d'une chute de force due à une brûlure de l'éprouvette (50).

3. Procédé selon l'une quelconque des revendications précédentes, **caractérisé par le fait que** l'instant du début de l'application (t0) est déterminé par une augmentation de la force.

4. Procédé selon l'une quelconque des revendications précédentes, **caractérisé par le fait qu'**une température de l'éprouvette (50) est déterminée, dans lequel, de préférence, on détermine la température du côté (52) de l'éprouvette (50), qui montre dans la direction opposée au flux massique (22).

5. Procédé selon la revendication 4, **caractérisé par le fait que** la force et/ou la température sont déterminées dans un dispositif de saisie de données (100) commun.

6. Procédé selon l'une quelconque des revendications précédentes, **caractérisé par le fait qu'**une impulsion agissant sur l'éprouvette (50) est déterminée au moyen de la force (F) agissant sur l'intervalle de temps (ts).

7. Procédé selon l'une quelconque des revendications précédentes, **caractérisé par le fait qu'**une thermophotographie et/ou une thermographie de l'éprouvette (50) est/sont enregistrées et/ou un signal acoustique est déterminé pendant l'application et/ou la vitesse de jet du flux massique (22) est déterminée.

8. Procédé selon l'une quelconque des revendications précédentes, **caractérisé par le fait que** le flux massique (22) est fourni par une charge propulsive de fusée, un chalumeau à acétylène avec alimentation en masse, une projection à la flamme ou une projection plasma.

9. Dispositif d'essai (10) pour l'essai thermomécanique d'une éprouvette (50), comprenant un support (30) qui présente une section de réception (32) et dans lequel ladite éprouvette (50) peut être reçue directement ou indirectement,
et un moyen d'application (20) destiné à fournir un flux massique thermique à grande vitesse (22) qui peut être dirigé sur l'éprouvette (50), **caractérisé par le fait que** le dispositif d'essai (10) comprend un dispositif de détermination qui comprend un dispositif de mesure de force (40) qui est couplé fonctionnellement au support (30) et qui est configuré de manière à déterminer la force (F) introduite dans l'éprouvette (50) par le flux massique (22) afin de déterminer une courbe force-temps.

10. Dispositif d'essai (10) selon la revendication 9, **caractérisé par le fait que** le dispositif de détermination est conçu pour déterminer une résistance à la brûlure de l'éprouvette (50), en particulier la résistance temporelle à la brûlure de l'éprouvette (50).

11. Dispositif d'essai (10) selon la revendication 9 ou 10, **caractérisé par le fait que** le dispositif de détermination présente un dispositif de mesure de température (81) pour déterminer la température de l'éprouvette (50) et/ou comprend une caméra à grande vitesse (82, 83) et/ou une caméra infrarouge (84) et/ou un dispositif de mesure acoustique (85).

12. Dispositif d'essai (10) selon l'une quelconque des revendications 9 à 11, **caractérisé par le fait que** le moyen d'application (20) est réglable par rapport au support (30), dans lequel, de préférence, un angle et/ou une distance du moyen d'application (20) est/sont réglable(s) par rapport au support (30).

13. Dispositif d'essai (10) selon l'une quelconque des revendications 9 à 12, **caractérisé par le fait que** le moyen d'application (20) est conçu en tant que charge propulsive de fusée, chalumeau à acétylène avec alimentation en masse, un dispositif de projection à la flamme, un élément galvanique ou un dispositif de projection plasma.

14. Dispositif d'essai (10) selon l'une quelconque des revendications 9 à 13, **caractérisé par le fait qu'**un moyen de protection (24) et/ou un dispositif de guidage (25) est disposé entre le moyen d'application (20) et la section de réception (32).

15. Dispositif d'essai (10) pour la mise en œuvre d'un procédé d'essai d'une éprouvette (50) selon l'une quelconque des revendications 1 à 8, **caractérisé par le fait que** le dispositif d'essai (10) est conçu selon l'une quelconque des revendications 9 à 14.
